# EUROPEAN PATENT APPLICATION

(11) **EP 4 621 862 A1**
(43) Date of publication of application: **24.09.2025**
(21) Application number: 24857840.3
(22) Date of filing: 13.05.2024
(51) Int. Cl.: H01M 4/13, H01M 4/64, H01M 10/05

(54) **ELECTRODE SHEET AND MANUFACTURING METHOD THEREFOR, BATTERY CELL, BATTERY AND ELECTRICAL APPARATUS**

(30) Priority: 01.09.2023 CN 202311125047
(71) Applicant: Contemporary Amperex Technology Co., Limited, Ningde, Fujian 352100 (CN)
(72) Inventor: WU, Kai, Ningde, Fujian 352100 (CN); JI, Xing, Ningde, Fujian 352100 (CN)
(74) Representative: Kraus & Lederer PartGmbB
(86) International application number: PCT/CN2024/092886
(87) International publication number: WO 2025/044291

(57) **Abstract**

An electrode sheet and a manufacturing method therefor, a battery cell, a battery and an electrical apparatus, belonging to the technical field of batteries. The electrode sheet includes a current collector, a first insulating layer and a second insulating layer, where the current collector includes a main body part and tabs, the tabs extend from the first end of the main body part, and the first end is one end of the main body part in a first direction. Each tab includes a first portion and a second portion, the first portion being close to the main body part with respect to the second portion, the surfaces of the two sides of the first portion are respectively provided with the first insulating layer and the second insulating layer, and the thickness d2 of the second insulating layer being greater than the thickness d1 of the first insulating layer. The electrode sheet helps to improve the reliability of battery cells.

## Description

### CROSS-REFERENCE TO RELATED APPLICATIONS

The present application claims priority to Chinese Patent Application No. 202311125047.6, filed on Friday, September 1, 2023 and entitled "Electrode Sheet and Manufacturing Method Therefor, Battery Cell, Battery, and Electrical Apparatus", which is incorporated herein by reference in its entirety.

### TECHNICAL FIELD

The present application relates to the technical field of batteries, and in particular, to an electrode sheet and a preparation method therefor, a battery cell, a battery, and an electrical apparatus.

### BACKGROUND

With increasingly serious environmental pollution, the new energy industry receives increasingly more attention from people. In the new energy industry, a battery technology is an important factor for the development thereof.

In the development of the battery technology, various design factors, such as energy density, cycle life, and reliability, need to be considered. The design of an electrode sheet in a battery cell is critical to the reliability of the battery cell. Therefore, how to provide an electrode sheet to improve the reliability of the battery cell is an urgent technical problem to be solved.

### SUMMARY

The present application has been made in view of the above problem, and an objective thereof is to provide an electrode sheet improve the reliability of the battery cell.

In order to achieve the above objective, the present application provides an electrode sheet and a preparation method therefor, a battery cell, a battery, and an electrical apparatus.

In a first aspect, there is provided an electrode sheet including a current collector, a first insulating layer and a second insulating layer, where the current collector includes a main body part and tabs, the tabs extend from the first end of the main body part, and the first end is one end of the main body part in a first direction. Each tab includes a first portion and a second portion, the first portion being close to the main body part with respect to the second portion, the surfaces of the two sides of the first portion are respectively provided with the first insulating layer and the second insulating layer, and the thickness d2 of the second insulating layer being greater than the thickness d1 of the first insulating layer.

An embodiment of the present application provides an electrode sheet including a current collector, a first insulating layer, and a second insulating layer. The current collector includes a main body part and tabs, the tabs extend from a first end of the main body part, and the first end of the main body part is an end of the main body part in a first direction. Each tab includes a first portion and a second portion, where the first portion is located close to the main body part with respect to the second portion, the surfaces of the two sides of the first portion are respectively provided with the first insulating layer and the second insulating layer, in this way, the risk of contact between the first portion and an electrode of opposite polarity is reduced. The thickness d2 of the second insulating layer is greater than the thickness d1 of the first insulating layer; in this way, in the case of bending the tab, since the thickness of the second insulating layer is greater than that of the first insulating layer, the side surface of the first portion provided with the second insulating layer is more difficult to bend than the side surface of the first portion provided with the first insulating layer; the second insulating layer can play a certain supporting role on the first insulating layer; the bent tab consequently occupies reduced spatial volume in the height direction, which mitigates risks including self-discharge and short-circuiting that may occur when the bent tab is extruded against the electrode assembly within the battery cell and enhances the overall reliability of the battery cell.

In a possible implementation, a ratio of the thickness d2 of the second insulating layer to the thickness d1 of the first insulating layer satisfies d2/d1≥1.8. In this way, the thickness of the first insulating layer and the thickness of the second insulating layer have a certain difference, and one side surface of the first portion of the tab provided with the second insulating layer is more difficult to bend than the side surface of the first portion provided with the first insulating layer, which is advantageous to further reduce the risk of insertion of the bent tab into an electrode assembly of the battery cell after.

In a possible implementation, the ratio of the thickness d2 of the second insulating layer to the thickness d1 of the first insulating layer satisfies 2≤d2/d1≤20. In this way, the thickness difference between the first insulating layer and the second insulating layer is more appropriate to facilitate the bending of the tab.

In a possible implementation, the thickness d1 of the first insulating layer satisfies 1 µm≤d1≤12 µm; optionally, 4 µm≤d1≤6 µm.

In the case where d1 is not less than 1 µm, it is advantageous to reduce the difficulty of manufacturing of the first insulating layer; in the case where the thickness d1 of the first insulating layer does not exceed 12 µm, the first insulating layer has a small thickness to facilitate bending of the first portion of the tab, and the difficulty of bending of the tab can be further reduced.

In a possible implementation, the thickness d2 of the second insulating layer satisfies 10 µm≤d2≤24 µm; optionally, 16 µm≤d2≤18 µm. In this way, the second insulating layer has an appropriate bending difficulty, so that the tab has an appropriate shape after it is bent, reducing the risk of insertion of the bent tab into an electrode assembly of the battery cell.

In a possible implementation, the main body part includes a coating region and a transition region, the transition region is provided between the coating region and the tab, and the surfaces of the two sides of the transition region are provided with the first insulating layer and the second insulating layer, respectively. By providing the first insulating layer and the second insulating layer on the surface of the transition region, it is advantageous to reduce the risk of short-circuiting, etc. caused by contact between the transition region and an electrode of opposite polarity.

In a possible implementation, the electrode sheet further includes an active material layer, and the active material layer is provided on a surface of at least one side of the coating region. The surface of the active material layer on at least one side of the coating region is not cut to the active material layer in a cutting process, and the risk of the active material layer falling off is reduced. In addition, by providing the active material layer, the battery cell can be subjected to charge and discharge operations, which is advantageous to a normal operation of the battery cell.

In a possible implementation, the first insulating layer and the second insulating layer include a thermoplastic polymer.

In the above-mentioned technical solution, in the process of cutting the current collector to manufacture the tab, under the effect of the heat generated by cutting, the thermoplastic polymer in the first insulating layer and the second insulating layer is transformed from a solid state to a flowable state, and then flows to an exposed end surface of the current collector generated by cutting, and the thermoplastic polymer in the flowable state solidifies after cooling, and can cover burrs generated by cutting and the exposed end surface, so that the risk of contact between the burrs or the exposed end surface and an electrode of opposite polarity can be reduced, which is advantageous to further improve the reliability of the battery cell.

In a possible implementation, a maximum particle size D¹ₘₐₓ of the thermoplastic polymer satisfies D¹ₘₐₓ≤12 µm; optionally, D¹ₘₐₓ satisfies D¹ₘₐₓ≤6 µm. In this way, this configuration can reduce the risk of scratches occurring during the manufacturing of the first insulating layer due to the large maximum particle size of the thermoplastic polymer, meanwhile, it is also advantageous for the attainment of a first insulating layer with appropriate thickness, thereby facilitating the manufacturing process of the first insulating layer.

In a possible implementation, based on a total mass of the first insulating layer, a mass content A1 of the thermoplastic polymer satisfies 30wt%≤A1≤40wt%, and/or based on a total mass of the second insulating layer, a mass content A2 of the thermoplastic polymer satisfies 30wt%≤A2≤40wt%. In this way, the first insulating layer and/or the second insulating layer are provided with an appropriate mass content of the thermoplastic polymer, so that, after cutting, a uniform and dense coating layer can be formed on the exposed end surface after cutting.

In a possible implementation, the melting point T of the thermoplastic polymer satisfies 100°C≤T≤200°C.

In the above-mentioned technical solution, the thermoplastic polymer has an appropriate melting point, and in the process of cutting the current collector provided with the first insulating layer and the second insulating layer, the thermoplastic polymer is transformed from a solid state to a flowable state under the action of heat generated by cutting, and the thermoplastic polymer in the flowable state may flow to the end surface of the current collector exposed after the cutting and burrs generated by the cutting, thereby facilitating, thereby facilitating the formation of a coating layer at the exposed end surface.

In a possible implementation, a melting point of the thermoplastic polymer is 100°C to 130°C. In this way, the formation of the coating layer at the exposed end surfaces is facilitated under the effect of a lower heat.

In a possible implementation, the thermoplastic polymer includes at least one of polystyrene, polyolefin, polyimide, polyester, polyphenylene sulfide, polyamide, and modified polymers thereof, optionally, the polyester includes a copolymer of butyl acrylate and ethyl methacrylate, optionally, the polyamide includes polyaramid; optionally, the polyolefin includes polyethylene wax. By using the above-described thermoplastic polymer, it is advantageous to form a uniform and dense coating layer at the end surface of the exposed current collector after the cutting and at the burrs generated by the cutting.

In a possible implementation, the first insulating layer and the second insulating layer further include inorganic particles. In this way, the first insulating layer and the second insulating layer have a better wear resistance, and the risk of the first insulating layer and the second insulating layer falling off can be reduced.

In a possible implementation, based on a total mass of the first insulating layer, a mass content B1 of the inorganic particles satisfies 30wt%≤B1≤40wt%, and/or based on a total mass of the second insulating layer, a mass content B2 of the inorganic particles satisfies 30wt%≤B2≤40wt%. By rationally setting the mass content of the inorganic particles, the first insulating layer and the second insulating layer have better wear resistance, and the risk of the first insulating layer and the second insulating layer falling off from the current collector in the process of manufacturing, transporting and using the battery cell is small.

In a possible implementation, a maximum particle size D²ₘₐₓ of the inorganic particles satisfies D²ₘₐₓ≤12 µm; optionally, D²ₘₐₓ satisfies D²ₘₐₓ≤6 µm. In this way, the inorganic particles having an appropriate particle size can reduce the risk of scratches occurring during the manufacturing of the first insulating layer and the second insulating layer, meanwhile, it is also advantageous for the manufacturing of the first insulating layer and the second insulating layer having an appropriate thickness, thereby facilitating the manufacturing of the first insulating layer and the second insulating layer.

In a possible implementation, a volume particle size distribution, Dv50, of the inorganic particles satisfies 0.5 µm≤Dv50≤6 µm; optionally, a volume particle size distribution, Dv50, of the inorganic particles satisfies 0.5 µm≤Dv50≤2 µm. **In** this way, in the process of manufacturing the first insulating layer and the second insulating layer, the slurry of the first insulating layer and the second insulating layer has an appropriate viscosity to facilitate the coating of the first insulating layer and the second insulating layer; and the slurry of the first insulating layer and the second insulating layer has a relatively appropriate solid content, thereby facilitating drying in an oven of the first insulating layer and the second insulating layer.

**In** a possible implementation, the inorganic particles include insulating inorganic particles. **In** this way, the first insulating layer and the second insulating layer have a certain insulation property.

**In** a possible implementation, the insulating inorganic particles include at least one of boehmite and alumina. The boehmite and alumina have good heat resistance and insulation properties, and by selecting boehmite or alumina as the insulating inorganic particles, the first insulating layer and the second insulating layer have good heat resistance and insulation properties.

In a possible implementation, the first insulating layer and the second insulating layer further include a binder. By providing the binder, the thermoplastic polymer can be bonded to the current collector, thereby reducing the risk of the thermoplastic polymer falling off from the current collector.

In a possible implementation, based on a total mass of the first insulating layer, a mass content C1 of the binder satisfies 20wt%≤C1≤40wt%, and/or based on a total mass of the second insulating layer, a mass content C2 of the binder satisfies 20wt%≤C2≤40wt%. In this way, the binder has an appropriate mass content, the first insulating layer and the second insulating layer have an appropriate binding force with the current collector, and the risk of falling off from the current collector is low.

In a possible implementation, the binder includes at least one of a polyacrylic acid-polyacrylonitrile copolymer, a polyacrylate-polyacrylonitrile copolymer, a polyether acrylate, a polyacrylic acid, a polyacrylonitrile, a gelatin, a chitosan, and a sodium alginate. The binder has good bonding properties to facilitate the bonding of the thermoplastic polymer to the surface of the current collector. Optionally, the binder includes polyacrylonitrile, and the binder has good leveling properties, which is advantageous to uniformly coat the surface of the current collector with the first insulating layer and the second insulating layer.

In a possible implementation, the first insulating layer and the second insulating layer are different in color. In this way, the identification of the first insulating layer and the second insulating layer is facilitated, and the manufacturing of the subsequent electrode assembly and the battery cell is facilitated.

In a possible implementation, a binding force F1 between the first insulating layer and the current collector satisfies 80 N/m≤F1≤200 N/m; optionally, F1 satisfies 80 N/m≤F1≤145 N/m. In this way, the bond between the first insulating layer and the current collector is relatively strong, so that the risk of the first insulating layer falling off from the current collector can be reduced.

In a possible implementation, a binding force F2 between the second insulating layer and the current collector satisfies 20 N/m≤F2≤100 N/m; optionally, F2 satisfies 20 N/m≤F2≤65 N/m. In this way, the bond between the second insulating layer and the current collector is stronger, and the risk of the second insulating layer falling off from the current collector can be reduced.

In a possible implementation, the size k1 of the first insulating layer is the same as the size k2 of the second insulating layer in the first direction. In this way, it is advantageous to reduce the manufacturing complexity of the first insulating layer and the second insulating layer.

In a possible implementation, in the first direction, a ratio of the size k1 of the first insulating layer to a sum k3 of the sizes of the first insulating layer and the second portion satisfies 0.3≤k1: k3≤0.5. In the case where k1: k3 is not less than 0.3, it is advantageous to reduce the risk of short-circuiting caused by contact between the first portion and an electrode of opposite polarity; and in the case where k1: k3 does not exceed 0.5, it is advantageous to attach the second portion of the tab to the end cap assembly of the battery cell.

In a possible implementation, the electrode sheet further includes a coating layer which is provided on a first end surface, and the first end surface is an end surface of the main body part at the first end. In this way, the coating layer may coat the first end surface, so as to reduce the risk of the first end surface being exposed, and thus can reduce the risk of short-circuiting caused by contact between the first end surface and an electrode of opposite polarity; in addition, the coating may also coat burrs generated as a result of the cutting process, reducing the risk of contact between the burrs and an electrode of opposite polarity.

In a possible implementation, the thickness d3 of the coating layer satisfies 100 nm≤d3≤200 nm, in this way, the coating layer can better coat the burrs and the exposed first end surface with a small thickness. Optionally, the thickness d3 of the coating layer satisfies 140 nm≤d3≤200 nm. In this way, it is advantageous to further improve the coating effect on the burrs and the first end surface.

In a possible implementation, a resistance R of the coating layer satisfies R ≥ 50 Ω; optionally, R satisfies 230 Ω≤R≤500 Ω. The resistance at the coating layer satisfies the above condition. In this way, the risk of short-circuiting of the battery cell caused by contact between the end surface and an electrode of opposite polarity may be reduced.

In a possible implementation, the coating layer is provided on the first and second end surfaces, the second end surface being an end surface of two ends of the first portion in a second direction, the second direction being different from the first direction; optionally, the second direction is perpendicular to the first direction. In this way, the coating layer may coat the second end surface exposed by the cutting, and the risk of contact between the second end surface and an electrode of opposite polarity can be reduced.

In a possible implementation, the coating layer includes a thermoplastic polymer, the thermoplastic polymer in the coating layer is made of the same material as that is for the thermoplastic polymer in the first insulating layer and the second insulating layer. In this way, it is advantageous to the simplification of preparation steps for the electrode sheet, thereby speeding up the production.

In a possible implementation, the thermoplastic polymer in the coating layer is a film layer. In this way, the coating layer is formed after the thermoplastic polymers in the first insulating layer and the second insulating layer are melted and re-solidified. In this way, it is advantageous to the simplification of manufacturing steps of the electrode sheet, and the coating layer can be formed at the same time as cutting.

In a possible implementation, the thickness d4 of the first portion of the tab satisfies 10 µm≤d4≤15 µm. In this way, the tab has an appropriate thickness.

In a possible implementation, the electrode sheet includes a positive electrode sheet; optionally, the current collector includes an aluminum foil. In this way, it is advantageous to reduce the risk of contact between the positive electrode sheet with the negative electrode sheet, and to improve the reliability of the battery cell. In addition, it is also advantageous to the reduction of the risk of the positive electrode sheet overlapping a lithium dendrite extracted from the negative electrode sheet. The current collector includes an aluminum foil, so that the current collector has a relatively simple structure, which is advantageous to the simplification of the current collector manufacturing process.

In a possible implementation, the positive electrode sheet includes a positive electrode active material which includes at least one of a layered transition metal oxide, a spinel material, and an olivine-structured phosphate material, optionally, the olivine-structured phosphate material includes lithium iron phosphate; optionally, the layered transition metal oxide includes LiNi_{0.8}Co_{0.1}Mn_{0.1}O₂.

In a possible implementation, the current collector includes a metal foil sheet or a composite current collector; optionally, the metal foil sheet includes aluminum foil or copper foil; optionally, the composite current collector includes a polymer material base layer and a metal layer on at least one surface of the polymer material base layer; and optionally, the current collector includes aluminum foil. In this way, it is advantageous to the selection of an appropriate current collector according to practical needs.

In a second aspect, there is provided a method of manufacturing the electrode sheet of the first aspect and any one of its possible implementations, which includes: coating surfaces of at least two sides of the first portion of the tab of the current collector with a first insulating slurry and a second insulating slurry respectively to manufacture the first insulating layer and the second insulating layer, wherein the thickness of the second insulating layer is greater than that of the first insulating layer; and cutting the current collector provided with the first insulating layer and the second insulating layer to manufacture the electrode sheet.

In the electrode sheet manufactured in the above-mentioned technical solution, the risk of short-circuiting and self-discharge caused by insertion of the bent tab into an electrode assembly of the battery cell is low, which is advantageous to the improvement of the reliability of the battery cell.

In a possible implementation, the coating surfaces of at least two sides of the first portion of the tab of the current collector with a first insulating slurry and a second insulating slurry respectively to manufacture the first insulating layer and the second insulating layer includes coating the surfaces of the two sides of the first portion and the transition region of the main body part of the current collector with the first insulating slurry and the second insulating slurry respectively to manufacture the first insulating layer and the second insulating layer. In this way, in the manufactured electrode sheet, both the transition region of the main body part and the first portion of the tab are provided with a first insulating layer and a second insulating layer.

In a possible implementation, the coating surfaces of at least two sides of the first portion of the tab of the current collector with a first insulating slurry and a second insulating slurry respectively to manufacture the first insulating layer and the second insulating layer includes: coating a surface of one side of the first portion with the first insulating slurry through gravure coating to manufacture the first insulating layer; and the second insulating layer is manufactured by coating the other surface of the first portion with the second insulating slurry through the gravure coating or extrusion coating. By means of the gravure coating, it is convenient to manufacture a first insulating layer with a relatively small thickness; the second insulating layer may be coated in an appropriate manner according to actual needs or thickness.

In a possible implementation, the method further includes: coating the coating region of the main body part of the current collector with the active material to manufacture an active material layer.

In a possible implementation, the cutting the current collector provided with the first insulating layer and the second insulating layer includes: controlling a laser processing tool to cut the current collector provided with the first insulating layer and the second insulating layer.

In the above technical solution, the current collector is cut by means of a laser, and much heat may be generated during cutting, which is advantageous to the transformation of the thermoplastic polymer in the first insulating layer and the second insulating layer into a flowable state and flowing to the end surface, thereby facilitating the formation of the coating layer.

In a possible implementation, the first insulating slurry is the same as the second insulating slurry. In this way, it is advantageous to the simplification of manufacturing process of the first insulating layer and the second insulating layer.

In a possible implementation, a ratio of the thickness d2 of the second insulating layer to the thickness d1 of the first insulating layer satisfies d2/d1≥1.8.

In a possible implementation, the ratio of the thickness d2 of the second insulating layer to the thickness d1 of the first insulating layer satisfies 2≤d2/d1≤20.

In a possible implementation, the thickness d1 of the first insulating layer satisfies 1 µm≤d1≤12 µm; optionally, 4 µm≤d1≤6 µm.

In a possible implementation, the thickness d2 of the second insulating layer satisfies 10 µm≤d2≤24 µm; optionally, 16 µm≤d2≤18 µm.

In a possible implementation, the first insulating slurry and the second insulating slurry include a thermoplastic polymer, a binder, and inorganic particles.

In a possible implementation, a maximum particle size D¹ₘₐₓ of the thermoplastic polymer satisfies D¹ₘₐₓ≤12 µm; optionally, D¹ₘₐₓ satisfies D¹ₘₐₓ≤6 µm.

In a possible implementation, based on a total mass of the first insulating slurry, a mass content A1 of the thermoplastic polymer satisfies 30wt%≤A1≤40wt%, and/or based on a total mass of the second insulating slurry, a mass content A2 of the thermoplastic polymer satisfies 30wt%≤A2≤40wt%.

In a possible implementation, the melting point T of the thermoplastic polymer satisfies 100°C≤T≤200°C.

In a possible implementation, a melting point of the thermoplastic polymer is 100°C to 130°C.

In a possible implementation, the thermoplastic polymer includes at least one of polystyrene, polyolefin, polyimide, polyester, polyphenylene sulfide, polyamide, and modified polymers thereof, optionally, the polyester includes a copolymer of butyl acrylate and ethyl methacrylate, optionally, the polyamide includes polyaramid; optionally, the polyolefin includes polyethylene wax.

In a possible implementation, based on a total mass of the first insulating slurry, a mass content B1 of the inorganic particles satisfies 30wt%≤B1≤40wt%, and/or based on a total mass of the second insulating slurry, a mass content B2 of the inorganic particles satisfies 30wt%≤B2≤40wt%.

In a possible implementation, a maximum particle size D²ₘₐₓ of the inorganic particles satisfies D²ₘₐₓ≤12 µm; optionally, D²ₘₐₓ satisfies D²ₘₐₓ≤6 µm.

In a possible implementation, a volume particle size distribution, Dv50, of the inorganic particles satisfies 0.5 µm≤Dv50≤6 µm; optionally, a volume particle size distribution, Dv50, of the inorganic particles satisfies 0.5 µm≤Dv50≤2 µm.

In a possible implementation, the inorganic particles include insulating inorganic particles.

In a possible implementation, the insulating inorganic particles include at least one of boehmite and alumina.

In a possible implementation, based on a total mass of the first insulating slurry a mass content C1 of the binder satisfies 20wt%≤C1≤40wt%, and/or based on a total mass of the second insulating slurry, a mass content C2 of the binder satisfies 20wt%≤C2≤40wt%.

In a possible implementation, the binder includes at least one of a polyacrylic acid-polyacrylonitrile copolymer, a polyacrylate-polyacrylonitrile copolymer, a polyether acrylate, a polyacrylic acid, a polyacrylonitrile, a gelatin, a chitosan, and a sodium alginate.

According to a third aspect, a battery cell is provided, including the electrode piece according to the first aspect and any one of the possible implementations thereof, and/or the electrode piece prepared by using the method according to the second aspect and any one of the possible implementations thereof.

In a possible implementation, the battery cell comprises an electrode assembly, the electrode assembly comprises an electrode assembly main body and a tab portion extending from the electrode assembly main body, a surface on which the second insulating layer is located faces the electrode assembly main body, and a surface on which the first insulating layer is located faces away from the electrode assembly main body.

The thickness of the second insulating layer is greater than that of the first insulating layer, in this way, the surface on which the second insulating layer is located faces the electrode assembly main body, in this way, the second insulating layer has a certain supporting function, and when the electrode assembly expands or the battery cell is shaken, collided or extruded, the risk of insertion of the tab portion into the electrode assembly main body is lower, which is advantageous to the improvement of the reliability of the battery cell.

In a possible implementation, the tab portion comprises a plurality of tabs, and a sum of a number of layers of the plurality of tabs is greater than or equal to 50. In this way, the number of layers of the tab is large, the number of the electrode sheets is large, the battery cell has a high energy density, meanwhile, the risk of insertion of the tab portion into the electrode assembly main body is low.

In a fourth aspect, there is provided a battery including a battery cell as described in the third aspect and any of its possible implementations.

According to a fifth aspect, there is provided an electrical apparatus including the battery according to the fourth aspect.

### DESCRIPTION OF DRAWINGS

In order to more clearly illustrate the technical solutions of the embodiments of the present application, the drawings required to be used in the embodiments of the present application will be briefly introduced below. Obviously, the drawings described below are only some embodiments of the present application. For persons of ordinary skill in the art, other drawings can also be obtained from the drawings without creative work.
FIG. 1 is a schematic diagram of an electrode sheet before tab processing according to an embodiment of the present application;
FIG. 2 is a schematic diagram of an electrode sheet according to an embodiment of the present application;
FIG. 3 is a sectional view along line A-A in FIG. 2;
FIG. 4 is a sectional view along line B-B in FIG. 2;
FIG. 5 is a schematic diagram of a preparation method for an electrode sheet according to an embodiment of the present application;
FIG. 6 is a schematic diagram of a battery cell according to an embodiment of the present application;
FIG. 7 is a schematic diagram of a tab portion of a battery cell according to an embodiment of the present application;
FIG. 8 is a schematic diagram of a tab portion of a battery cell in the related art;
FIG. 9 is a schematic diagram of insertion of a tab portion into an electrode assembly;
FIG. 10 is a schematic diagram of a battery according to an embodiment of the present application;
FIG. 11 is a schematic diagram of an electrical apparatus according to an embodiment of the present application;
FIG. 12 is a CT view of a tab portion of a battery cell according to an embodiment of the present application;
FIG. 13 is a CT view of a tab portion of a battery cell in a comparative example of the present application; and
FIG. 14 is a CT view of insertion of a tab portion into an electrode assembly main body in a comparative example of the present application.

Reference numerals: 1: electrode sheet; 124: cutting line; 10: current collector; 11: active material layer; 121: first insulating layer; 1211: first sub-portion; 1212: second sub-portion; 122: second insulating layer; 101: main body part; 102: tab; 1021: first portion; 1022: second portion; 1011: coating region; 1012: transition region; 1011a: first end surface; 1222a: second end surface.

### DESCRIPTION OF EMBODIMENTS

The embodiments of the electrode sheet and preparation method therefor, the battery cell, the battery, and the electrical apparatus of the present application are described below in detail with reference to the drawings as appropriate. However, an unnecessary detailed description may be omitted. For example, a detailed description of well-known matters and repeated descriptions of a substantially same structure may be omitted. This is to avoid the following descriptions from becoming unnecessarily redundant and to facilitate understanding by those skilled in the art. The accompanying drawings and the following descriptions are provided for those skilled in the art to fully understand this application, and are not intended to limit the subject matter described in the claims.

The "range" disclosed in this application is limited in the form of a lower limit and an upper limit. A given range is limited by selecting a lower limit and an upper limit, which define the boundaries of the specific range. A range defined in this manner may include an end value or may not include an end value, and may be any combination, that is, any lower limit may be combined with any upper limit to form a range. For example, if the ranges of 60-120 and 80-110 are listed for a specific parameter, it is understood that the ranges of 60-110 and 80-120 are also expected. In addition, if the minimum range values of 1 and 2 are listed, and if the maximum range values of 3, 4, and 5 are listed, the following ranges may all be expected: 1-3, 1-4, 1-5, 2-3, 2-4, and 2-5. In this application, unless otherwise stated, a numerical range "a-b" represents a shorthand representation for a combination of any real numbers between a and b, where both a and b are real numbers. For example, the numerical range of "0-5" represents that all real numbers between "0-5" have been listed herein, and "0-5" is only a shortened representation of these numerical combinations. In addition, when a parameter is expressed as an integer ≥ 2, it is equivalent to disclosing that the parameter is an integer such as 2, 3, 4, 5, 6, 7, 8, 9, 10, 11, or 12.

Unless otherwise specified, all embodiments and optional embodiments of this application may be combined with each other to form new technical solutions.

Unless otherwise specified, all technical features and optional technical features of this application can be combined with each other to form new technical solutions.

Unless otherwise specified, all steps in this application may be performed sequentially or randomly, preferably sequentially. For example, the method comprises steps (a) and (b), meaning that the method may comprise steps (a) and (b) performed sequentially or steps (b) and (a) performed sequentially. For example, the mentioned method may further comprise step (c), meaning that step (c) may be added to the method in any order, e.g. the method may comprise steps (a), (b) and (c), or steps (a), (c) and (b), or steps (c), (a) and (b), etc.

In the development of battery technologies, various design factors, such as energy density, cycle life, discharge capacity, charge/discharge rate, and reliability, are simultaneously taken into consideration. Energy density, as an important property, is critical to the battery cell. High-capacity battery cells typically have higher energy densities, while high-capacity battery cells require more electrode sheets. In the process of manufacturing a battery cell, it is necessary to wind or laminate a plurality of electrode sheets (including a positive electrode sheet and a negative electrode sheet) and a separator into an electrode assembly, and then bend the tabs of the electrode sheets to save the space occupied by the tabs, thereby increasing the energy density of the battery cell. However, during the manufacturing and use of the battery cell, the bent tab is easily extruded, and the electrode assembly (e.g., the part of the electrode sheet other than the tab in the electrode assembly) may be inserted, so that self-discharge or even short-circuiting occurs, which is not advantageous to the improvement of the reliability of the battery cell.

In view of this, the present application provides an electrode sheet that includes a current collector, a first insulating layer, and a second insulating layer. The current collector includes a main body part and tabs, the tabs extend from a first end of the main body part, and the first end of the main body part is an end of the main body part in a first direction. Each tab includes a first portion and a second portion, where the first portion is close to the main body part with respect to the second portion, the surfaces of the two sides of the first portion are respectively provided with the first insulating layer and the second insulating layer, and the thickness d2 of the second insulating layer is greater than the thickness d1 of the first insulating layer; in this way, in the case of bending the tab, since the thickness of the second insulating layer is greater than that of the first insulating layer, the side surface of the first portion provided with the second insulating layer is more difficult to bend than the side surface of the tab provided with the first insulating layer; thus, the side surface of the first portion provided with the second insulating layer can play a certain supporting role, and in the case of being extruded, the risk of insertion of the bent tab into an electrode assembly in the battery cell is reduced, so that the risk of self-discharge, short-circuiting, etc. can be reduced, which is advantageous to the improvement of the reliability of the battery cell.

### [Electrode sheet]

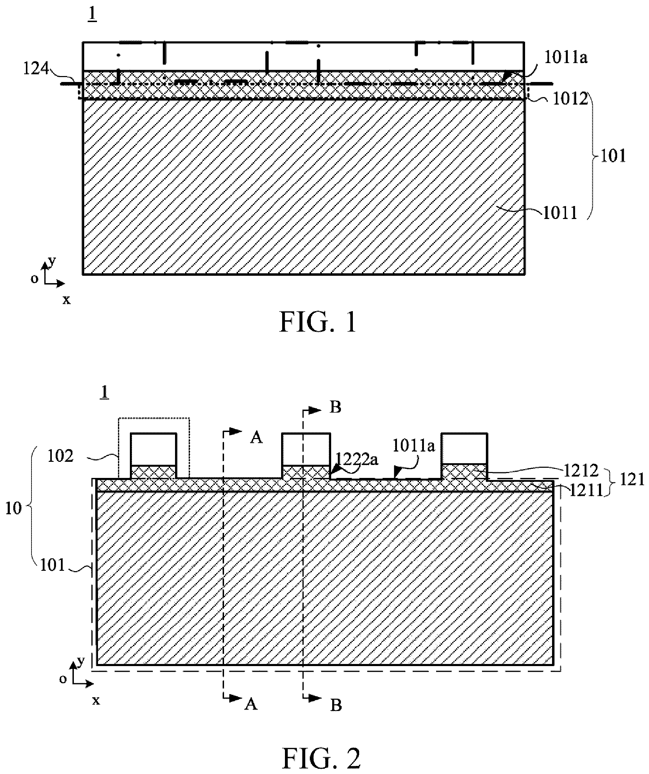

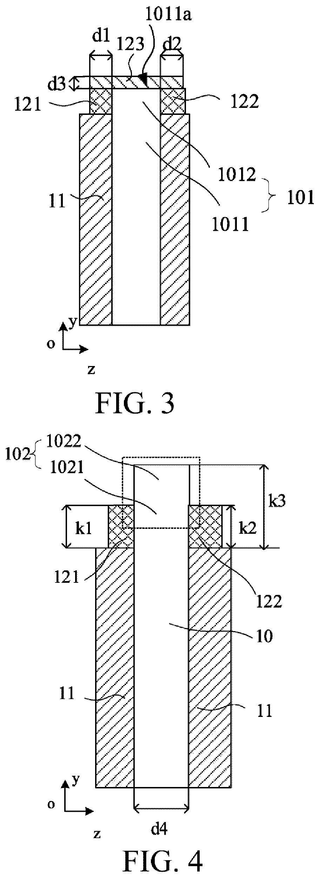

FIG. 1 is a schematic diagram of an electrode sheet before tab processing according to an embodiment of the present application. FIG. 2 is a schematic diagram of an electrode sheet according to an embodiment of the present application. FIG. 3 is a sectional view along line A-A in FIG. 2. FIG. 4 is a sectional view along line B-B in FIG. 2.

Referring to FIGS. 1 and 2, FIG. 1 is a schematic diagram of an electrode sheet before tab processing, and FIG. 2 is a schematic diagram of an electrode sheet after tab processing. As shown in FIG. 1, a black dashed line is a cutting line 124 for tab cutting, and an electrode sheet 1 as shown in FIG. 2 is obtained after cutting along the cutting line 124.

Referring to FIGS. 1 to 4, the electrode sheet 1 includes a current collector 10, a first insulating layer 121, and a second insulating layer 122.

The current collector 10 includes a main body part 101 and a tab 102, where the tab 102 extends from a first end of the main body part 101, and the first end is one end of the main body part 101 in the first direction.

The first direction is parallel to a plane where the current collector 10 is located, and is a direction in which the tab 102 protrudes with respect to the main body part 101. For example, the first direction is a y direction in FIG. 2.

The tab 102 includes a first portion 1021 and a second portion 1022, where the first portion 1021 is located close to the main body part 101 with respect to the second portion 1022, and the surfaces of the two sides of the first portion 1021 is provided with a first insulating layer 121 and a second insulating layer 122, respectively.

The first portion 1021 and the second portion 1022 are connected, and the second portion 1022 is not provided with the first insulating layer 121 and the second insulating layer 122, that is to say, the second portion 1022 is exposed.

The surfaces on two sides of the first portion 1021 refer to the opposite surfaces of the first portion 1021 in the thickness direction of the current collector 10. The surfaces of the two sides of the first portion 1021 are provided with a first insulating layer 121 and a second insulating layer 122, respectively, that is, the surface of one side of the first portion 1021 is provided with the first insulating layer 121, and the surface of the other side of the first portion 1021 is provided with the second insulating layer 122.

The thickness d2 of the second insulating layer 122 is larger than the thickness d1 of the first insulating layer 121. It can also be the that the thickness of the second insulating layer 122 is different from that of the first insulating layer 121.

The thickness d1 of the first insulating layer 121 may refer to an average thickness of the first insulating layer 121. For example, the average thickness is an average value of a maximum size and a minimum size of the first insulating layer 121 in the thickness direction. Similarly, the thickness d2 of the second insulating layer 122 refers to the average thickness of the second insulating layer 122.

The thickness of the second insulating layer 122 is greater than that of the first insulating layer 121, in this way, in the case of bending the tab 102, since the thickness of the second insulating layer 122 is greater than that of the first insulating layer 121, the side surface of the first portion 1021 on which the second insulating layer 122 is provided is more difficult to bend than the side surface of the first portion 1021 on which the first insulating layer 121 is provided, and the second insulating layer 122 also has a certain function of supporting the first insulating layer 121. **In** the embodiment of the present application, compared to the manner in which the thickness of the second insulating layer 122 is the same as that of the first insulating layer 121, the bent tab 102 occupies a smaller space in the height direction of the battery cell (the height direction of the battery cell may be the arrangement direction of the electrode assembly in the battery cell and the end cap provided with the electrode terminal in the battery cell).

The bent tab 102 is extruded by the end cap or the electrode assembly due to the extruding of the bent tab 102 caused by the expansion of the electrode assembly during the use, transportation or manufacturing of the battery cell, or by the external force such as collision and shaking of the battery cell. With the arrangement of the embodiment of the present application, after the bent tab 102 is extruded, since the space occupied by the bent tab 102 is smaller and the second insulating layer 122 supports the first insulating layer 121, the risk of insertion of bent tab 102 into an electrode assembly upon extrusion is smaller, and the risk of self-discharge, short-circuiting or the like caused by insertion of the bent tab into an electrode assembly of the battery cell can be reduced, which is advantageous to the improvement of the reliability of the battery cell.

An embodiment of the present application provides an electrode sheet 1 including a current collector 10, a first insulating layer 121, and a second insulating layer 122. The current collector 10 includes a main body part 101 and a tab 102, where the tab 102 extends from a first end of the main body part 101, and the first end is one end of the main body part 101 in the first direction. The tab 102 includes a first portion 1021 and a second portion 1022, where the first portion 1021 is located close to the main body part 101 with respect to the second portion 1022, the surfaces of the two sides of the first portion 101 is provided with a first insulating layer 121 and a second insulating layer 122, respectively, in this way, the risk of contact between the first portion 1021 and an electrode of opposite polarity is reduced. The thickness of the second insulating layer 122 is greater than that of the first insulating layer 121; the side surface of the first portion 1021 provided with the second insulating layer 122 is more difficult to bend than the side surface of the first portion 1021 provided with the first insulating layer 121; the second insulating layer 122 can play a certain supporting role on the first insulating layer 121; the bent tab 102 consequently occupies reduced spatial volume in the height direction, which mitigates risks including self-discharge and short-circuiting that may occur when the bent tab 102 is extruded against the electrode assembly within the battery cell, which is advantageous to enhance the overall reliability of the battery cell.

In some embodiments, a ratio of the thickness d2 of the second insulating layer 122 to the thickness d1 of the first insulating layer 121 satisfies d2/d1≥1.8. For example, d2/d1 is 1.8, 2, 3, 5, 8, 10, 20, or any other value within the above-mentioned ranges.

In the case of d2/d1 ≥ 1.8, the thickness of the first insulating layer 121 and the thickness of the second insulating layer 122 have a certain difference, and one side surface of the first portion 1021 of the tab 102 provided with the second insulating layer 122 is more difficult to bend than the side surface of the first portion 1021 provided with the first insulating layer 121, which is advantageous in further reducing the risk of insertion of the bent tab 102 into an electrode assembly of the battery cell.

In some embodiments, a ratio of the thickness d2 of the second insulating layer 122 to the thickness d1 of the first insulating layer 121 satisfies 2≤d2/d1≤20. In this way, the thickness difference between the first insulating layer 121 and the second insulating layer 122 is less to facilitate the bending of the tab 102.

In some embodiments, the thickness d1 of the first insulating layer 121 satisfies 1 µm≤d1≤12 µm. For example, d1 is 1 µm, 2 µm, 4 µm, 6 µm, 8 µm, 10 µm, 12 µm, or any value within the ranges described above.

In the case where d1 is not less than 1 µm, it is advantageous to reduce the difficulty of manufacturing the first insulating layer 121; in the case where the thickness d1 of the first insulating layer 121 does not exceed 12 µm, the first insulating layer 121 has a small thickness to facilitate bending of the first portion 1021 of the tab 102, and the difficulty of bending of the tab 102 can be further reduced.

In some embodiments, d1 satisfies 4 µm≤d1≤6 µm, for example 4 µm, 5 µm, 6 µm or any value within the ranges described above. In this way, it is advantageous to further balance the difficulty in manufacturing the first insulating layer 121 with the difficulty in bending the first portion 1021, thereby facilitating both the manufacturing of the first insulating layer 121 and the bending of the tab 102.

In some embodiments, the thickness d2 of the second insulating layer 122 satisfies 10 µm≤d2≤24 µm. For example, d1 is 10 µm, 12 µm, 14 µm, 16 µm, 18 µm, 20 µm, 24 µm, or any value within the ranges described above.

In the case where d2 is not less than 10 µm, the second insulating layer 122 is more difficult to bend than the first insulating layer 121, so that it is advantageous to the tab 102 to have a more appropriate shape after it is bent, thereby reducing the risk of insertion of the bent tab 102 into an electrode assembly of the battery cell. In the case where d2 does not exceed 24 µm, it is convenient to reduce the risk of the second insulating layer 122 being difficult to bend due to the large thickness of the second insulating layer 122 itself. In this way, in the case of 10 µm≤d2≤24 µm, the second insulating layer 122 has an appropriate bending difficulty, so that the tab 102 has an appropriate shape after it is bent, reducing the risk of insertion of the bent tab 102 into an electrode assembly in a battery cell.

In some embodiments, d2 satisfies 16 µm≤d2≤18 µm. In this way, the second insulating layer 122 has an appropriate thickness to facilitate bending of the tab 102 and to reduce the space occupied by the second insulating layer 122, such that it is advantageous to have a compromise between the reliability of the battery cell and the volumetric energy density.

In some embodiments, d1 is 5 µm and d2 is 10 µm. Optionally, d1 is 6 µm and d2 is 12 µm. d1 and d2 can also be other values that satisfy the above ranges, and embodiments of the present application include, but are not limited to thereto.

In some embodiments, the main body part 101 includes a coating region 1011 and a transition region 1012, the transition region 1012 is provided between the coating region 1011 and the tab 102, and surfaces on two sides of the transition region 1012 are provided with a first insulating layer 121 and a second insulating layer 122, respectively.

The first insulating layer 121 is provided on a surface of one side of the transition region 1012 and the first portion 1021, and a second insulating layer 122 is provided on a surface of the other side of the transition region 1012 and the first portion 1021.

The first insulating layer 121 may include a first sub-portion 1211 located at a surface of the transition region 1012 of the main body part 101 and a second sub-portion 1212 located at a surface of the first portion 1021 of the tab 102. Similarly, the second insulating layer 122 includes two sub-portions, one sub-portion located at the surface of the transition region 1012 of the main body part 101 and the other sub-portion located at the surface of the first portion 1021 of the tab 102.

In the above-described embodiment, by providing the first insulating layer 121 and the second insulating layer 122 on the surfaces of the two sides of the transition region 1012, respectively, it is advantageous to reduce a risk of short-circuiting or the like caused by contact between the transition region 1012 and an electrode of opposite polarity.

In some embodiments, the electrode sheet 1 also includes an active material layer 11 provided on a surface of at least one side of the coating region 1011. In this way, the active material layer 11 is not cut in a cutting process, and the risk of the active material layer 11 falling off is reduced. In addition, by providing the active material layer 11, the battery cells can be subjected to charge and discharge operations, which is advantageous to a normal operation of the battery cells.

In some embodiments, the active material layer 11 is provided on the surfaces of the two sides of the coating region 1011.

Optionally, in some embodiments, the active material layer 11 is provided on a surface of one side of the coating region 1011.

In some embodiments, the first insulating layer 121 and the second insulating layer 122 include a thermoplastic polymer.

The thermoplastic polymer may refer to a polymer that softens after being heated, solidifies when being cooled, and can soften again. For example, when heated to a temperature, the thermoplastic polymer is transformed from a solid particle into a flowable state, and after cooled, it may be transformed into a thermoplastic polymer in the shape of a layer or film layer.

The thermoplastic polymer in the first insulating layer 121 and the second insulating layer 122 is transformed from a solid state to a flowable state when heated to a certain condition, in this way, in the process of cutting the current collector 10 provided with the first insulating layer 121 and the second insulating layer 122, the flowable state thermoplastic polymer can flow to the burrs generated by the cutting and the exposed end surface of the current collector 10 after the cutting, and after the temperature is reduced, the flowable state thermoplastic polymer solidifies at the burrs and the exposed end surface so as to coat the burrs and the exposed end surface; thus, the risk of contact between the burrs and the exposed end surface and an electrode of opposite polarity can be reduced, which is advantageous to further improve the reliability of the battery cell.

In some embodiments, the maximum particle size D¹ₘₐₓ of the thermoplastic polymer satisfies D¹ₘₐₓ≤12 µm; optionally, D¹ₘₐₓ satisfies D¹ₘₐₓ≤6 µm.

D¹ₘₐₓ may be 3 µ m, 5 µ m, 6 µ m, 7 µ m, 8 µ m, 9 µ m, 10 µ m, 12 µ m, or any value within the range above.

In this way, it is possible to reduce the risk of scratches occurring during the manufacturing of the first insulating layer 121 and the second insulating layer 122 due to the large maximum particle size of the thermoplastic polymer, meanwhile, it is also advantageous for the attainment of the first insulating layer 121 and the second insulating layer 122 with an appropriate thickness, thereby facilitating the manufacturing of the first insulating layer 121 and the second insulating layer 122.

In some embodiments, due to factors such as the manufacturing process of the thermoplastic polymer, the maximum particle size D¹ₘₐₓ of the thermoplastic polymer has a certain corresponding relationship with the volume particle size distribution Dv50 of the thermoplastic polymer, for example, the two satisfy a normal distribution or slightly deviate from the normal distribution.

In some embodiments, based on a total mass of the first insulating layer 121, a mass content A1 of the thermoplastic polymer satisfies 30wt%≤A1≤40wt%, and/or based on a total mass of the second insulating layer 122, a mass content A2 of the thermoplastic polymer satisfies 30wt%≤A2≤40wt%.

A1 can be 30wt%, 35wt%, 40wt%, or any value within the above-mentioned ranges, and A2 can be 30wt%, 35wt%, 40wt%, or any value within the above-mentioned ranges. A1 and A2 may be the same value or may be different values.

As an example, A1 and A2 are the same value. The slurry for the first insulating layer 121 and the slurry for the second insulating layer 122 have the same formulation, in this way, it is advantageous to reduce the manufacturing complexity.

In the above embodiment, in the case where 30wt% of≤A1≤40wt%, the first insulating layer 121 has an appropriate mass content of the thermoplastic polymer therein; in the case where 30wt%≤A2≤40wt%, the second insulating layer 122 has an appropriate mass content of the thermoplastic polymer; in this way, a uniform and dense coating layer can be formed on the exposed end surface of the current collector 10 after cutting.

In some embodiments, the melting point T of the thermoplastic polymer satisfies 100°C≤T≤200°C.

For example, the melting point of the thermoplastic polymer is 100°C, 110°C, 130°C, 150°C, 200°C, or any numerical value within the range above.

The melting point of the thermoplastic polymer is a temperature at which the thermoplastic polymer is transformed from a solid or semi-solid state into a liquid state.

The melting point of the thermoplastic polymer is not less than 100°C. In this way, the risk of the thermoplastic polymer melting or flowing due to heating of the electrode sheet 1 in other processing processes may be reduced. The melting point of the thermoplastic polymer does not exceed 200 °C, in this way, the risk of failing to transform the thermoplastic polymer into a flowable state during cutting is reduced, thereby reducing the risk of failure to form a coating layer or of insufficiently uniform and dense coating layer at the exposed end surface of the current collector 10 after cutting. In addition, the melting point of the thermoplastic polymer does not exceed 200 °C, and the thermoplastic polymer can be transformed to a flowable state with less heat, thereby it is advantageous to reduce energy consumption for cutting.

In the above-described embodiment, the thermoplastic polymer has an appropriate melting point, and in the process of cutting the current collector 10 provided with the first insulating layer 121 and the second insulating layer 122, the thermoplastic polymer is transformed from a solid state to a flowable state by the heat generated by the cutting, and the flowable state thermoplastic polymer can flow to the end surface of the current collector 10 exposed after the cutting and the burrs generated by the cutting, thereby facilitating the manufacturing of a coating layer coating the exposed end surface.

In some embodiments, a melting point T of the thermoplastic polymer is 100°C to 130°C. In this way, the formation of the coating layer at the exposed end surfaces is facilitated under the effect of a lower heat.

The thermoplastic polymer includes at least one of polystyrene, polyolefin, polyimide, polyester, polyphenylene sulfide, polyamide, and modified polymers thereof. Optionally, the polyester includes a copolymer of butyl acrylate and ethyl methacrylate, optionally, the polyamide includes polyaramid; optionally, the polyolefin includes polyethylene wax. By using the above-described thermoplastic polymer, it is advantageous to form a uniform and dense coating layer at the end surface of the exposed current collector 10 after the cutting and at the burrs generated by the cutting.

The polyolefin may refer to a general term for a class of thermoplastic resins obtained through homopolymerization or copolymerization of α-olefins including but not limited to ethylene, propylene, 1-butene, 1-pentene, 1-hexene, 1-octene, 4-methyl-1-pentene, as well as certain cyclic olefins. For example, polyolefins include polyethylene waxes.

For example, the thermoplastic polymer includes at least one of a modified polymer of polystyrene, a modified polymer of polyolefin, a modified polymer of polyimide, a modified polymer of polyester, a modified polymer of polyphenylene sulfide, and a modified polymer of polyamide.

The melting point of a thermoplastic polymer is related to the molecular weight of the thermoplastic polymer. In general, the higher the molecular weight, the higher the melting point. Thermoplastic polymers of different molecular weights have different melting points for the same class of thermoplastic polymers.

In some embodiments, the first insulating layer 121 and the second insulating layer 122 further include inorganic particles.

The inorganic particles are included in the first insulating layer 121 and the second insulating layer 122, and the inorganic particles are advantageous to the improvement of the wear resistance of the first insulating layer 121 and the second insulating layer 122. For example, during the use, transportation or manufacturing of the battery cell, the first insulating layer 121 is in contact with an end cap, an adapter sheet, etc. of the battery cell and is worn, and the second insulating layer 122 is in contact with an electrode assembly of the battery cell and is worn; due to the presence of the inorganic particles, the wear resistance of the first insulating layer 121 and the second insulating layer 122 is improved, and the risk of falling off from the current collector 10 is reduced.

In some embodiments, based on a total mass of the first insulating layer 121, a mass content B1 of the inorganic particles satisfies 30wt%≤B1≤40wt%, and/or based on a total mass of the second insulating layer 122, a mass content B2 of the inorganic particles satisfies 30wt%≤B2≤40wt%.

B1 can be 30wt%, 35wt%, 40wt%, or any value within the above-mentioned ranges, and B2 can be 30wt%, 35wt%, 40wt%, or any value within the above-mentioned ranges. B1 and B2 may be the same value or may be different values.

By rationally setting the mass content of the inorganic particles, the first insulating layer 121 and the second insulating layer 122 have better wear resistance, and the risk of the first insulating layer 121 and the second insulating layer 122 falling off from the current collector 10 in the process of manufacturing, transporting and using the battery cell is small.

In some embodiments, the maximum particle size D²ₘₐₓ of the inorganic particles satisfies D²ₘₐₓ≤12 µm; optionally, D²ₘₐₓ satisfies D²ₘₐₓ≤6 µm. In this way, the inorganic particles having an appropriate particle size can reduce the risk of scratches occurring during the manufacturing of the first insulating layer 121 and the second insulating layer 122, meanwhile, it is also advantageous for the manufacturing of the first insulating layer 121 and the second insulating layer 122 having an appropriate thickness, thereby facilitating the manufacturing of the first insulating layer 121 and the second insulating layer 122.

D²ₘₐₓ may be 3 µ m, 5 µ m, 6 µ m, 7 µ m, 8 µ m, 9 µ m, 10 µ m, 12 µ m, or any value within the range above.

In some embodiments, the inorganic particles have a volume particle size distribution Dv50 that satisfies 0.5 µm≤Dv50≤6 µm. For example, Dv50 is 0.5 µm, 1 µm, 2 µm, 4 µm, 5 µm, 6 µm, or any value within the ranges described above.

In this way, in the process of manufacturing the first insulating layer 121 and the second insulating layer 122, the slurry of the first insulating layer 121 and the second insulating layer 122 has an appropriate viscosity to facilitate the coating of the first insulating layer 121 and the second insulating layer 122; and the slurry of the first insulating layer 121 and the second insulating layer 122 has a relatively appropriate solid content, thereby facilitating drying in an oven of the first insulating layer 121 and the second insulating layer 122.

Due to the influence of factors such as the manufacturing process, there is a certain correspondence between the volume particle size distribution Dv50 of the inorganic particles and the maximum particle size D²ₘₐₓ of the inorganic particles. For example, when the volume particle size distribution Dv50 of the inorganic particles is 0.5 µm, D²ₘₐₓ is about 1 µm, when the volume particle size distribution Dv50 of the inorganic particles is 2 µm, D²ₘₐₓ is about 5 µm, and when the volume particle size distribution Dv50 of the inorganic particles is 6 µm, D²ₘₐₓ is about 10 µm.

In some embodiments, the inorganic particles have a volume particle size distribution Dv50 that satisfies 0.5 µm≤Dv50≤2 µm. In this way, the particle size of the inorganic particles is small, thereby facilitating separation of some impurities in the slurry of the first insulating layer 121 and the second insulating layer 122 from the inorganic particles, thereby facilitating filtration of the impurities.

In some embodiments, the inorganic particles include insulating inorganic particles. In this way, the first insulating layer 121 and the second insulating layer 122 have a certain insulation property.

Optionally, the insulating inorganic particles include at least one of boehmite (γ-AlOOH) and alumina. The boehmite and alumina have good heat resistance and insulation properties, and the first insulating layer 121 and the second insulating layer 122 have good heat resistance and insulation properties by selecting the boehmite or alumina as the insulating inorganic particles to be added to the first insulating layer 121 and the second insulating layer 122. In addition, the boehmite and the alumina are readily available at a relatively low cost.

The inorganic particles may also be inorganic particles that do not conduct electricity at an operating voltage of the battery (e.g., do not conduct electricity at a voltage of 5V). For example, the inorganic particles may have a certain dielectric constant.

The inorganic particles have a certain ion transport property, but the inorganic particles are insulated at least at the operating voltage of the battery.

As another example, the insulating inorganic particles may also be silicon oxide or the like. The embodiments of the present application include, but are not limited to thereto.

In some embodiments, the inorganic particles may also be inorganic particles having a dielectric constant of 3 or higher, which may include at least one selected from the group consisting of: boehmite (γ-AlOOH), alumina (Al₂O₃), barium sulfate (BaSO₄), magnesium oxide (MgO), magnesium hydroxide (Mg(OH)₂), silicon oxide compound SiOₓ(0<x≤2), tin dioxide (SnO₂), titanium dioxide (TiO₂), calcium oxide (CaO), zinc oxide (ZnO), zirconium dioxide (ZrO₂), yttrium oxide (Y₂O₃), nickel oxide (NiO), hafnium dioxide (HfO₂), cerium dioxide (CeO₂), zirconium titanate (ZrTiO₃), barium titanate (BaTiO₃), magnesium fluoride (MgF₂), Pb(Zr,Ti)O₃ (abbreviated as PZT), Pb₁₋ₘLaₘZr₁₋ₙTiₙO₃ (abbreviated as PLZT, 0<m<1, 0<n<1), and Pb(Mg₃Nb_{2/3})O₃-PbTiO₃ (abbreviated as PMN-PT).

In some embodiments, the inorganic particles possess active ion transport capability and may include at least one of lithium phosphate (Li₃PO₄), lithium titanium phosphate (LiₓTi_{y}(PO₄)₃, 0<x<2, 0<y<3), lithium aluminum titanium phosphate (LiₓAl_{y}Ti_{z}(PO₄)₃, 0<x<2, 0<y<1, 0<z<3), (LiAlTiP)ₓO_{y}-type glass (0<x<4, 0<y<13), lithium lanthanum titanate (LiₓLa_{y}TiO₃, 0<x<2, 0<y<3), lithium germanium thiophosphate (LiₓGe_{y}P_{z}S_{w}, 0<x<4, 0<y<1, 0<z<1, 0<w<5), lithium nitride (LiₓN_{y}, 0<x<4, 0<y<2), SiS₂-type glass (LiₓSi_{y}S_{z}, 0<x<3, 0<y<2, 0<z<4), and P₂S₅-type glass (LiₓP_{y}S_{z}, 0<x<3, 0<y<3, 0<z<7).

In some embodiments, the first insulating layer 121 and the second insulating layer 122 further include a binder. In this way, in manufacturing the first insulating layer 121 and the second insulating layer 122, it is convenient to bond the thermoplastic polymer in the insulating slurry of the first insulating layer 121 and the second insulating layer 122 to the surface of the current collector 10, thereby reducing the risk of the thermoplastic polymer falling off from the current collector 10.

In some embodiments, based on a total mass of the first insulating layer 121, a mass content C1 of the binder satisfies 20wt%≤C1≤40wt%, and/or based on a total mass of the second insulating layer 122, a mass content C2 of the binder satisfies 20wt%≤C2≤40wt%.

C1 can be 20wt%, 30wt%, 35wt%, 40wt%, or any number of the foregoing ranges, and C2 can be 20wt%, 30wt%, 35wt%, 40wt%, or any number of the foregoing ranges. C1 and C2 may be the same value or may be different values.

In the above-described embodiment, the binder has an appropriate mass content, the first insulating layer 121 and the second insulating layer 122 have an appropriate binding force with respect to the current collector 10, and the risk of falling off from the current collector 10 is low.

In some embodiments, the binder includes at least one of a polyacrylic acid-polyacrylonitrile copolymer, a polyacrylate-polyacrylonitrile copolymer, a polyether acrylate, a polyacrylic acid, a polyacrylonitrile, a gelatin, a chitosan, and a sodium alginate.

The binder has good bonding properties to facilitate the bonding of the thermoplastic polymer to the surface of the current collector 10.

Optionally, the binder is polyacrylonitrile, and the binder has good leveling properties, which is advantageous to uniformly coat the surface of the current collector 10 with the first insulating layer 121 and the second insulating layer 122.

In some embodiments, a binding force F1 between the first insulating layer (121) and the current collector (10) satisfies 80 N/m≤F1≤200 N/m; optionally, F1 satisfies 80 N/m≤F1≤145 N/m.

F1 may be 80N/m, 100N/m, 120N/m, 150N/m, 180N/m, 200N/m, or any value within the ranges described above.

In the case where the binding force between the first insulating layer 121 and the current collector 10 is 80N/m to 200N/m, the binding force between the first insulating layer 121 and the current collector 10 is strong, so that the risk of the first insulating layer 121 falling off from the current collector 10 can be reduced.

In some embodiments, the binding force F2 between the second insulating layer 122 and the current collector 10 satisfies 20N/m≤F2≤100N/m; optionally, F2 satisfies 20N/m≤F2≤65N/m.

F2 may be 20N/m, 60N/m, 65N/m, 80N/m, 90N/m, 100N/m, or any value within the ranges described above.

In the case where the binding force between the second insulating layer 122 and the current collector 10 is 20N/m to 100N/m, the binding force between the second insulating layer 122 and the current collector 10 is strong, so that the risk of the second insulating layer 122 falling off from the current collector 10 can be reduced.

In some embodiments, the size k1 of the first insulating layer 121 is the same as the size k2 of the second insulating layer 122 in the first direction. In this way, it is advantageous to reduce the manufacturing complexity of the first insulating layer 121 and the second insulating layer 122.

In some embodiments, a ratio of the size k1 of the first portion 1021 to a sum k3 of the sizes of the first insulating layer 121 and the second portion 1012 in the first direction satisfies 0.3 ≤k1: k3≤0.5. For example, k1: k3 is 0.3, 0.4, 0.5, or any value within the ranges described above.

k3 is the sum of the size of the first insulating layer 121 and the size of the second portion 1012 in the first direction.

In the case where k1: k3 is not less than 0.3, it is advantageous to reduce the risk of short-circuiting caused by contact between the first portion 1021 and an electrode of opposite polarity; and in the case where k1: k3 does not exceed 0.5, it is advantageous to attach the second portion 1022 of the tab 102 to the end cap assembly of the battery cell.

In some embodiments, the electrode sheet 1 further includes a coating layer 123 provided at a first end surface 1011a which is the end surface of the main body part 101 at the first end.

The first end surface 1011a is a face parallel to the thickness direction of the current collector 10. For example, as shown in FIG. 3, the end surface 1011a is a surface parallel to the x direction and the z direction.

The first end surface 1011a may be formed by the following process: referring to FIG. 1, cutting the current collector 10 along the cutting line 124, where the first end surface 1011a is an end surface of the transition region 1012 after cutting. After the cutting, the current collector 10 is exposed at the first end surface 1011a, and may be accompanied by the generation of burrs.

In the above-mentioned embodiment, the coating layer 123 may coat the first end surface 1011a, so as to reduce the risk of the first end surface 1011a being exposed, and thus may reduce the risk of short-circuiting caused by contact between the first end surface 1011a and an electrode of opposite polarity; in addition, the coating layer 123 may also coat burrs generated as a result of the cutting process, reducing the risk of contact between the burrs and an electrode of opposite polarity.

In some embodiments, the thickness d3 of the coating layer 123 satisfies 100 nm≤d3≤200 nm. For example, d3 is 100 nm, 120 nm, 160 nm, 200 nm, or any value within the ranges described above.

Optionally, the thickness of the coating layer 123 is related to that of the first insulating layer 121 and the second insulating layer 122. For example, in the case where the first insulating layer 121 and the second insulating layer 122 include a thermoplastic polymer, the greater the thickness of the first insulating layer 121 and the second insulating layer 122, the more the thermoplastic polymer is in the first insulating layer 121 and the second insulating layer 122, and the greater the thickness of the coating layer 123, the more is advantageous to the formation of a uniform and dense coating layer 123.

The thickness d3 of the coating layer 123 is the average thickness of the coating layer 123. For example, the thickness d3 is an average value of the largest size and the smallest size in the thickness direction of the coating layer 123.

The thickness d3 of the coating layer 123 can be measured in the following manner: the first end surface 1011a of the electrode sheet 1 is photographed using an electronic scanning (SEM) microscope, and measuring the thickness d3 of the coating layer 123 through the obtained picture.

In the above-described embodiment, the coating layer 123 can better coat the burrs and the first end surface 1011a with a small thickness.

In some embodiments, a electrical resistance R of the coating layer 123 satisfies R≥50 Ω. For example, R is 50 Ω, 100 Ω, and 200 Ω.

In the case where the electrical resistance of the coating layer 123 is greater than 50 Ω, and there is contact between the first end surface 1011a and an electrode of opposite polarity, since the coating layer 123 is provided with a certain electrical resistance, internal short-circuiting of the battery cells does not occur, so that the risk of short-circuiting or even explosion due to the internal short-circuiting can be reduced.

Optionally, the resistance R of the coating layer 123 satisfies 230 Ω≤R≤500 Ω. In this way, the risk of short-circuiting of the battery cell caused by contact between the first end surface 1011a and an electrode of opposite polarity may be reduced.

In some embodiments, the coating layer 123 is provided on a first end surface 1011a and a second end surface 1222a, the second end surface 1222a being the end surface of the first portion 1021 at two ends in a second direction, the second direction being different from the first direction.

In the case where the electrode sheet 1 includes a plurality of tabs 102, the second direction may be an arrangement direction of the plurality of tabs 102. For example, as shown in FIG. 2, the second direction is the x direction.

In the process of cutting the current collector 10 along a cutting line 124 to manufacture the tab 102, the cutting tool passes through an area of the second sub-portion 1212 of the first insulating layer 121 (which may also be referred to as an area of the first portion 1021 of the tab 102), and after cutting, the second end surface 1222a is exposed. By providing the coating layer 123 at the second end surface 1222a, the risk of contact between the second end surface 1222a and an electrode of opposite polarity will be reduced.

Optionally, the second direction is perpendicular to the first direction.

In the above-described embodiment, the coating layer 123 may coat the second end surface 1222a exposed due to the cutting, and the risk of contact between the second end surface 1222a and an electrode of opposite polarity may be reduced.

In some embodiments, the coating layer 123 includes a thermoplastic polymer, and the thermoplastic polymer in the coating layer 123 is made of the same material as that is for the thermoplastic polymer in the first insulating layer 121 and the second insulating layer 122. This helps to simplify the manufacturing steps of the electrode sheet 1 and speed up the production rhythm.

For example, the current collector 10 coated with the active material layer 11 may be cut before manufacturing the coating layer 123 at the first end surface 1011a and the second end surface 122a and the first insulating layer 121 and the second insulating layer 122 at the transition region 1012 and the first portion 1021 of the tab 102 using a heat-fusing tool (e.g., a heat-fusing gun, a heat-fusing coater, etc.). In this way, the first insulating layer 121 and the coating layer 123 can be simultaneously manufactured in one step.

As another example, the active material layer 11, the first insulating layer 121, and the second insulating layer 122 are first manufactured on the current collector 10, and the coating layer 123 is simultaneously manufactured in a cutting process. In this way, the tab 102 can be produced by cutting in one step, and the coating layer 123 is manufactured.

In some embodiments, the thermoplastic polymer in the coating layer 123 is a film layer. In other words, the coating layer 123 includes a thermoplastic polymer of a film layer.

In the above-described embodiment, the coating layer 123 is formed by melting and then solidifying the thermoplastic polymers in the first insulating layer 121 and the second insulating layer 122. After the thermoplastic polymers in the first insulating layer 121 and the second insulating layer 122 are transformed to be in a flowable state, they flow to the first end surface 1011a and the second end surface 1222a, and solidify to form the coating layer 123 at the first end surface 1011a and the second end surface 1222a. In this way, it is advantageous to the simplification of manufacturing steps of the electrode sheet 1, and the coating layer 123 can be formed at the same time as the cutting.

In the first insulating layer 121 and the second insulating layer 122, at least a part of the thermoplastic polymer in the form of particles is retained, for example, in the form of particles protruding from the current collector 10 at a position away from the cutting line 124. In the coating layer 123, the thermoplastic polymer is a film layer, and hardly has the shape of particles.

The thermoplastic polymer in the shape of a particle may have various shapes, e.g., a spherical shape, a rod shape, and a sheet shape. Here, the thermoplastic polymer in the shape of a particle means that the thermoplastic polymer is not transformed into the flowable state and is in the solid state.

In some embodiments, the thickness d4 of the first portion 1021 of the tab 102 satisfies 10 µm≤d4≤15 µm. In this way, after the first insulating layer 121 and the second insulating layer 122 are provided, the tab 102 has an appropriate thickness.

d4 may be 10 µm, 12 µm, 15 µm, or any value within the ranges described above. The thickness d4 of the first portion 1021 may also be the thickness of the current collector 10.

In some embodiments, the electrode sheet 1 includes a positive electrode sheet. Optionally, the current collector includes aluminum foil. In this manner, the electrode piece 1 is a positive electrode piece, which not only reduces the risk of contact between the positive electrode piece and a negative electrode piece but also enhances the reliability of the battery cell. In addition, it is also advantageous to the reduction of the risk of the positive electrode sheet overlapping a lithium dendrite extracted from the negative electrode sheet.

In some embodiments, the positive electrode sheet comprises a positive electrode active material, and the positive electrode active material includes at least one of a layered transition metal oxide, a spinel material, and an olivine-structured phosphate material.

Optionally, the olivine-structured phosphate material includes an olivine-structured lithium-containing phosphate, such as lithium iron phosphate. In this way, the battery cells manufactured from the electrode sheets have higher reliability.

The general formula of the olivine-structured lithium-containing phosphate may be LiₐAₓMn_{1-y}B_{y}P_{1-z}C_{z}O₄₋ₙDₙ, where 0<a≤1.1, 0.001≤x≤0.1, 0.001≤y<0.5, 0.001≤z≤0.1, 0.001≤n≤0.1, A includes one or more of Zn, Al, Na, K, Mg, Nb, Mo and W, B includes one or more of Ti, V, Zr, Fe, Ni, Mg, Co, Ga, Sn, Sb, Nb and Ge, and C includes one or more of S, F, C1 and Br.

The olivine-structured lithium-containing phosphate may also include at least one of lithium manganese phosphate and lithium iron manganese phosphate.

The layered transition metal oxide includes a layered lithium transition metal oxide or a layered sodium transition metal oxide.

Optionally, the lithium transition metal oxide includes LiNi_{0.8}Co_{0.1}Mn_{0.1}O₂ (also referred to as NCM811). In this way, the battery cells manufactured from the electrode sheets can have a high capacity.

The lithium transition metal oxide may also include other ternary materials, such as LiNi_{0.6}Co_{0.2}Mn_{0.2}O₂ (NCM622). The lithium-containing transition metal oxide may also include a lithium-rich manganese-based material or the like.

### Spinel materials include spinel lithium manganate or the like.

The positive electrode active material in this embodiment may be a sodium salt used in a sodium ion battery or a sodium metal battery, or may be a lithium salt used in a lithium ion battery or a lithium metal battery.

Deintercalation and consumption of Li occur during charging and discharging of the battery, and the molar content of Li is different when the battery is discharged to different states. The above definition of a includes the molar content of Li in different charging and discharging states of the battery (generally, the battery voltage is between 2 and 5 V). In the enumeration of the positive electrode material in this application, the molar content of Li is an initial state of the material, i.e., a state before adding. The positive electrode material is applied to a battery system, and the molar content of Li changes after charging and discharging cycles. In the enumeration of the positive electrode material in this application, the molar content of O is only a theoretical state value, the molar content of oxygen changes due to the release of oxygen from a lattice, and the actual molar content of O fluctuates.

In some embodiments, the current collector 10 includes a metal foil sheet or a composite current collector. In this way, setting a material of the current collector 10 according to practical needs is facilitated.

### Optionally, the metal foil sheet includes aluminum foil or copper foil.

Optionally, the composite current collector includes a polymer material base layer and a metal layer on at least one surface of the polymer material base layer.

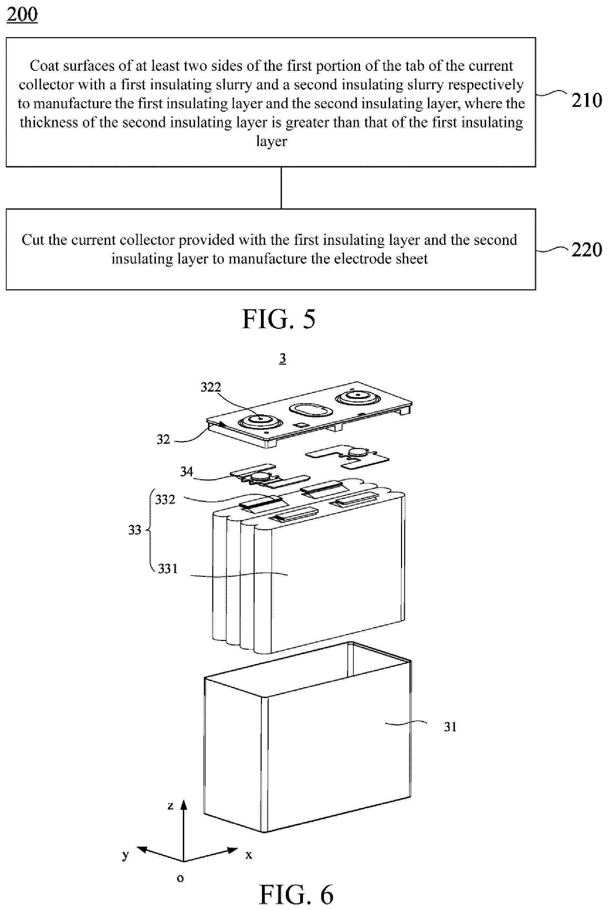

The technical solution of the electrode sheet is described above with reference to FIGS. 1 to 4. A preparation method for an electrode sheet is described below with reference to FIG. 5, where reference may be made to the above for parts corresponding to the electrode sheet, and details are not described here again.

### [Preparation method for an electrode sheet]

FIG. 5 is a schematic diagram of a preparation method for an electrode sheet according to an embodiment of the present application. The method 200 may be used to prepare the electrode sheet 1 in the embodiment above. The method 200 includes the following steps.
step 210, surfaces of at least two sides of the first portion 1021 of the tab 102 of the current collector 10 are coated with a first insulating slurry and a second insulating slurry respectively to manufacture the first insulating layer 121 and the second insulating layer 122, where the thickness of the second insulating layer 122 is greater than that of the first insulating layer 121; and
step 220, the current collector 10 provided with the first insulating layer 121 and the second insulating layer 122 is cut to manufacture the electrode sheet 1.

Specifically, the current collector 10 provided with the first insulating layer 121 and the second insulating layer 122 is cut along the cutting line 124.

In the electrode sheet 1 manufactured in the above-mentioned technical solution, the risk of short-circuiting and self-discharge caused by insertion of the bent tab 102 into an electrode assembly of the battery cell is low, which is advantageous to the improvement of the reliability of the battery cell.

In some embodiments, the step 210 includes: the first insulating layer 121 and the second insulating layer 122 are manufactured by coating the surfaces of the two sides of the first portion 1021 and the transition region 1012 of the main body part 101 of the current collector 10 with the first insulating slurry and the second insulating slurry, respectively. In this way, in the manufactured electrode sheet 1, both the transition region 1012 of the main body part 101 and the first portion 1021 of the tab 102 are provided with the first insulating layer 121 and the second insulating layer 122.

In some embodiments, the step 210 includes: the first insulating layer 121 is manufactured by coating a surface of one side of the first portion 1021 with the first insulating slurry through gravure coating; and the second insulating layer 122 is manufactured by coating the other surface of the first portion 1021 with the second insulating slurry through the gravure coating or extrusion coating. By means of the gravure coating, it is convenient to manufacture a first insulating layer 121 with a relatively small thickness; the second insulating layer 122 may be coated in an appropriate manner according to actual needs or thickness.

For example, the first insulating layer 121 and the second insulating layer 122 are each manufactured through gravure coating. In this way, the first insulating layer 121 and the second insulating layer 122 can be manufactured by the same process, which is advantageous in reducing the complexity of the process.

After the first insulating layer 121 and the second insulating layer 122 are manufactured, the coating region 1011 of the current collector 10 is coated with an active material to form the active material layer 11. The thickness of the active material layer 11 may be several tens of micrometers, which is greater than that of the first insulating layer 121. Since the thickness of the active material layer 11 is greater than that of the first insulating layer 121, by manufacturing the active material layer 11 after the first insulating layer 121 is manufactured, it is possible to reduce the influence of the active material layer 11 having a larger thickness on the manufacturing of the first insulating layer 121, and to facilitate the manufacturing of the first insulating layer 121 having a smaller thickness through gravure coating.

As an example, gravure coating may be carried out using a gravure coater. For example, the gravure coater includes a gravure roll, a press roll, and a scraper, and the coating of the first insulating layer 121 and the second insulating layer 122 is performed by the cooperation of the gravure roll, the press roll, and the scraper.

As another example, the first insulating layer 121 is manufactured through gravure coating, and the second insulating layer 122 is manufactured by extrusion coating.

In some embodiments, the method 200 further includes: the coating region 1011 of the main body part 101 of the current collector 10 is coated with an active material to manufacture the active material layer 11.

In some embodiments, the step 230 includes: a laser processing tool is controlled to cut the current collector 10 provided with the first insulating layer 121 and the second insulating layer 122.

In the above-described embodiment, the current collector 10 is cut by the laser, and more heat can be generated in a cutting process, which is advantageous for the thermoplastic polymers in the first insulating layer 121 and the second insulating layer 122 to be in a flowable state to the exposed end surface of the current collector 10, thereby facilitating the formation of the coating layer 123.

The use parameters of the laser processing tool can be set according to actual needs. For example, different powers, frequencies, and feed rates may be set depending on the type of thermoplastic polymer.

In some embodiments, the first insulating slurry is the same as the second insulating slurry. In this way, it is advantageous to the simplification of manufacturing process of the first insulating layer 121 and the second insulating layer 122.

In some embodiments, a ratio of the thickness d2 of the second insulating layer 122 to the thickness d1 of the first insulating layer 121 satisfies d2/d1≥2; optionally, 2≤d2/d1≤20.

In some embodiments, the thickness d1 of the first insulating layer 121 satisfies 1 µm≤d1≤12 µm; optionally, 4 µm≤d1≤6 µm.

In some embodiments, the thickness d2 of the second insulating layer 122 satisfies 10 µm≤d2≤24 µm.

In some embodiments, the insulating slurry includes a thermoplastic polymer, inorganic particles, and a binder.

In some embodiments, the maximum particle size D¹ₘₐₓ of the thermoplastic polymer satisfies D¹ₘₐₓ≤12 µm; optionally, D¹ₘₐₓ satisfies D¹ₘₐₓ≤6 µm.

In some embodiments, based on a total mass of the first insulating slurry, a mass content A1 of the thermoplastic polymer satisfies 30wt%≤A1≤40wt%, and/or based on a total mass of the second insulating slurry, a mass content A2 of the thermoplastic polymer satisfies 30wt%≤A2≤40wt%.

In some embodiments, the melting point T of the thermoplastic polymer satisfies 100°C≤T≤200°C.

In some embodiments, a melting point of the thermoplastic polymer is 100°C to 130°C.

In some embodiments, the thermoplastic polymer comprises at least one of polystyrene, polyolefin, polyimide, polyester, polyphenylene sulfide, polyamide, and modified polymers thereof, optionally, the polyester comprises a copolymer of butyl acrylate and ethyl methacrylate, optionally, the polyamide comprises polyaramid; optionally, the polyolefin comprises polyethylene wax.

In some embodiments, based on a total mass of the first insulating slurry, a mass content B1 of the inorganic particles satisfies 30wt%≤B1≤40wt%, and/or based on a total mass of the second insulating slurry, a mass content B2 of the inorganic particles satisfies 30wt%≤B2≤40wt%.

In some embodiments, the maximum particle size D²ₘₐₓ of the inorganic particles satisfies D²ₘₐₓ≤12 µm; optionally, D²ₘₐₓ satisfies D²ₘₐₓ≤6 µm.

In some embodiments, a volume particle size distribution, Dv50, of the inorganic particles satisfies 0.5 µm≤Dv50≤6 µm; optionally, a volume particle size distribution, Dv50, of the inorganic particles satisfies 0.5 µm≤Dv50≤2 µm.

In some embodiments, the inorganic particles include insulating inorganic particles.

In some embodiments, the insulating inorganic particles include: at least one of boehmite and alumina.

In some embodiments, based on a total mass of the first insulating slurry a mass content C1 of the binder satisfies 20wt%≤C1≤40wt%, and/or based on a total mass of the second insulating slurry, a mass content C2 of the binder satisfies 20wt%≤C2≤40wt%.

In some embodiments, the binder includes at least one of a polyacrylic acid-polyacrylonitrile copolymer, a polyacrylate-polyacrylonitrile copolymer, a polyether acrylate, a polyacrylic acid, a polyacrylonitrile, a gelatin, a chitosan, and a sodium alginate.

As an example, a thermoplastic polymer is first mixed with water to form a thermoplastic polymer emulsion, and then the polymer emulsion is mixed with a binder and inorganic particles. Since the thermoplastic polymer emulsion and the binder are liquid, the thermoplastic polymer emulsion and the binder in the liquid state can be uniformly mixed in a relatively short period of time, which is advantageous to reduce the manufacturing time of the insulating slurry.

### [Positive electrode sheet]

The electrode sheet 1 in this embodiment of the present application may be a positive electrode sheet. The positive electrode sheet includes a positive electrode current collector and a positive electrode film layer provided on the positive electrode current collector.

The positive electrode current collector may be a metal foil sheet or a composite current collector. For example, the positive electrode current collector may be aluminum foil.

The composite current collector may include a polymer material base layer and a metal layer formed on at least one surface of the polymer material base layer. The composite current collector may be formed by forming a metal material (aluminum, an aluminum alloy, nickel, a nickel alloy, titanium, a titanium alloy, silver, a silver alloy, and the like) on a base material of a polymer material such as a base material of polypropylene (PP), polyethylene terephthalate (PET), polybutylene terephthalate (PBT), polystyrene (PS), polyethylene (PE), and the like.

The positive electrode film layer includes a positive electrode active material. The positive electrode active material may be a positive electrode active material for a battery well-known in the art. For example, the positive electrode active material is a lithium iron phosphate, a ternary material, a lithium-rich manganese-based material, or the like.

The positive electrode film layer optionally further includes a binder. As an example, the binder may include at least one of polyvinylidene fluoride (PVDF), polytetrafluoroethylene (PTFE), vinylidene fluoride-tetrafluoroethylene-propylene terpolymer, vinylidene fluoride-hexafluoropropylene-tetrafluoroethylene terpolymer, tetrafluoroethylene-hexafluoropropylene copolymer, and fluorine-containing acrylate resin.

The positive electrode film layer optionally further includes a conductive agent. The conductive agent may include at least one of superconducting carbon, acetylene black, carbon black, ketjen black, carbon dot, carbon nanotube, graphene, and carbon nanofiber.

### [Negative electrode sheet]

The electrode sheet 1 in this embodiment of the present application may be a negative electrode sheet. The negative electrode sheet includes a negative electrode current collector and a negative electrode film layer provided on the negative electrode current collector.

The negative electrode current collector may be a metal foil sheet or a composite current collector. The negative electrode current collector may be copper foil. The composite current collector may be formed by forming a metal material (copper, a copper alloy, nickel, a nickel alloy, titanium, a titanium alloy, silver, a silver alloy, or the like) on the polymer material substrate (e.g., a substrate of polypropylene (PP), polyethylene terephthalate (PET), polybutylene terephthalate (PBT), polystyrene (PS), or polyethylene (PE)).

The negative electrode active material is included in the negative electrode film layer. The negative electrode active material may be a negative electrode active material for a battery well-known in the art. As an example, the negative electrode active material may include at least one of the following materials: synthetic graphite, natural graphite, soft carbon, hard carbon, a silicon-based material, a tin-based material, lithium titanate, and the like. The silicon-based material may include at least one of elemental silicon, a silicon-oxygen compound, a silicon-carbon composite, a silicon-nitrogen composite, and a silicon alloy. The tin-based material may include at least one of elemental tin, a tin-oxygen compound, and a tin alloy. However, this application is not limited to these materials, and another conventional material that can be used as a negative electrode active material of a battery may also be used. These negative electrode active materials may be used alone or in combination of two or more thereof.

The negative electrode film layer optionally further includes a conductive agent. The conductive agent may include at least one of superconducting carbon, acetylene black, carbon black, ketjen black, carbon dot, carbon nanotube, graphene, and carbon nanofiber.

### [Electrolyte]

The electrolyte functions to conduct ions between the positive electrode sheet and the negative electrode sheet. The type of the electrolyte is not specifically limited in this embodiment of the present application, and may be selected according to a requirement. For example, the electrolyte may be liquid, gelled or all solid.

In some embodiments, the electrolyte is an electrolyte solution. The electrolyte solution includes an electrolyte salt and a solvent.

The electrolyte salt may include at least one of lithium hexafluorophosphate, lithium tetrafluoroborate, lithium perchlorate, lithium hexafluoroarsenate, lithium bisfluorosulfonylimide, lithium bistrifluoromethanesulfonylimide, lithium trifluoromethanesulfonate, lithium difluorophosphate, lithium difluorooxalatoborate, lithium dioxalatoborate, lithium difluorodioxalatophosphate, and lithium tetrafluorooxalatophosphate.

The solvent may include at least one of ethylene carbonate, propylene carbonate, ethyl methyl carbonate, diethyl carbonate, dimethyl carbonate, dipropyl carbonate, methyl propyl carbonate, ethyl propyl carbonate, butylene carbonate, fluoroethylene carbonate, methyl formate, methyl acetate, ethyl acetate, propyl acetate, methyl propionate, ethyl propionate, propyl propionate, methyl butyrate, ethyl butyrate, 1, 4-butyrolactone, sulfolane, dimethyl sulfone, ethyl methyl sulfone, and diethyl sulfone.

The electrolyte optionally further includes a negative electrode film-forming additive, a positive electrode film-forming additive, and may further include an additive capable of improving specific performance of the battery, for example, an additive improving overcharge performance of the battery, an additive improving high-temperature or low-temperature performance of the battery, and the like.

### [Separator]

The separator is used to separate the positive electrode sheet from the negative electrode sheet. The type of the separator is not particularly limited in this embodiment of the present application, and any commonly known porous separator having good chemical stability and mechanical stability may be used.

A material of the separator may include at least one of glass fibers, nonwoven fabrics, polyethylene, polypropylene, and polyvinylidene fluoride. The separator may be a single-layer thin film or may be a multi-layer composite thin film, which is not particularly limited. When the separator is a multi-layer composite thin film, materials of each layer may be the same or different, which is not particularly limited.

The positive electrode sheet, the negative electrode sheet, and the separator may be formed into an electrode assembly through a winding process or a lamination process.

### [Battery cell]

An embodiment of the present application provides a battery cell, which includes the electrode sheet 1 in the above embodiments and/or the electrode sheet 1 manufactured by using the method in the above embodiments.

The shape of the battery cell is not particularly limited in this embodiment of the present application, and may be a cylindrical shape, a square shape, or any other shape. The battery cell may be a lithium ion battery, a lithium sulfur battery, a sodium ion battery, a magnesium ion battery, etc.

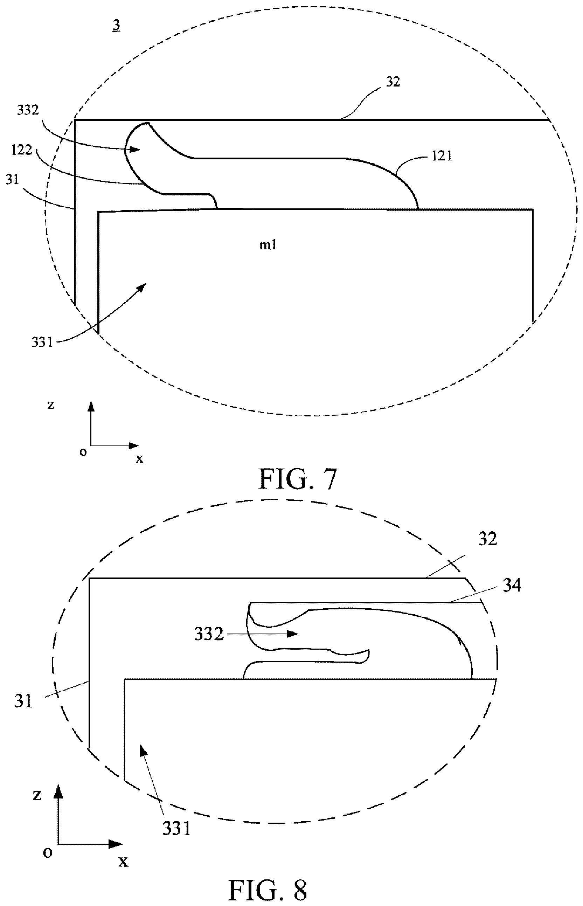

FIG. 6 is a schematic diagram of a battery cell according to an embodiment of the present application, and FIG. 7 is a schematic diagram of a tab portion according to an embodiment of the present application. In some embodiments, as shown in FIGS. 6 and 7, the battery cell includes an electrode assembly 33 including an electrode assembly main body 331 and a tab portion 332 extending from the electrode assembly main body 331, the second insulating layer 122 is provided on a surface facing the electrode assembly main body 331, and the first insulating layer 121 is provided on a surface facing away from the electrode assembly main body 331.

The electrode assembly 33 may be formed by the positive electrode sheet, the negative electrode sheet, and the separator through a winding process or a lamination process. As an example, the positive electrode sheet is the electrode sheet 1 in the embodiment of the present application.

The battery cell 3 further includes a case 31 in which the electrode assembly 33 is provided, and an end cap assembly 32.

The tab portion 332 is formed by bending the tab portions 102 of the plurality of electrode sheets 1. After the tab 102 is bent, the surface on which the second insulating layer 122 is located faces the electrode assembly main body 331, and the surface on which the first insulating layer 121 is located faces the end cap assembly 32. The tab portions 332 may be connected to the end cap assembly 32 by a current collecting member 34 (not shown in FIG. 7, see FIG. 6).

The thickness of the second insulating layer 122 is greater than that of the first insulating layer 121, and the surface on which the second insulating layer 122 is located faces the electrode assembly main body, in this way, the second insulating layer 122 has a certain supporting function, the size of the tab portion 332 in the height direction z of the battery cell 3 is small, and when the electrode assembly expands or the battery cell is shaken, collided or extruded, the risk of insertion of the tab portion 332 into the electrode assembly main body 331 is lower, which is advantageous to improve the reliability of the battery cell 3.

In some embodiments, the tab portion 332 includes a plurality of tabs 102, and a sum of a number of layers of the plurality of tabs 102 is greater than or equal to 50.

For example, referring to FIG. 6, the battery cell 3 includes four electrode assemblies, and the tab portions of the two electrode assemblies are stacked and bent together to form one tab portion 332. In one tab portion 332, the total number of layers of the tab 102 is equal to or greater than 50.

The number of layers of the tab 102 may be 50, 60, 80, 100, or more. As the number of the layers of the tab 102 increases, so does the capacity and energy density of the battery cell.

In this embodiment, the battery cell 1 has a high energy density, and at the same time, due to the provision of the first insulating layer 121 and the second insulating layer 122 in the electrode sheet, the risk of insertion of the bent tab portion 332 into an electrode assembly main body 331 upon extrusion or the like is reduced.

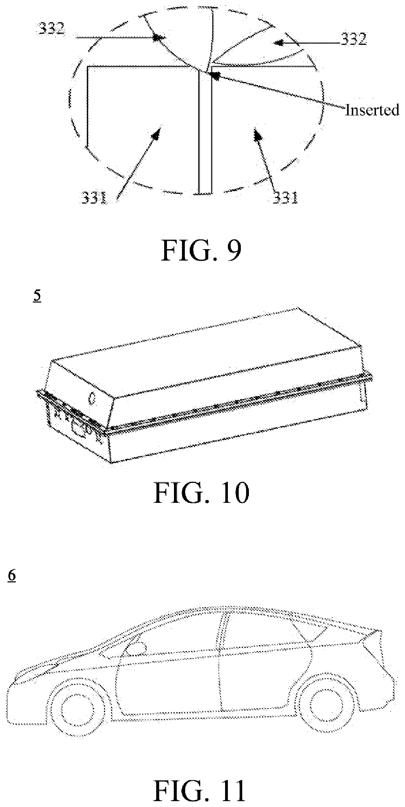

FIG. 8 is a schematic diagram of a tab portion of a battery cell in the related art; and FIG. 9 is a schematic diagram of insertion of a tab portion into an electrode assembly. Referring to FIGS. 8 and 9, in the battery cell shown in FIG. 8, the first insulating layer 121 and the second insulating layer 122 of the electrode sheet 1 have the same thickness. After the tab is bent, the shape of the bent tab portion 332 approximates a C-shape, as shown in FIG. 8. In the case where the tab portions 332 are extruded, one tab portion 332 may be bifurcated, for example, a part of the tab portion 332 is separated from another part of the tab portion, and a part of the tab portion is inserted into the electrode assembly main body 331.

In some embodiments, the end cap assembly 32 includes an electrode terminal 322. For example, as shown in FIG. 6, the end cap assembly 32 includes two electrode terminals 322, one of which is a positive electrode terminal and the other is a negative electrode terminal.

The battery cell 3 further includes a current collecting member 34 for connecting a tab portion 331 of the electrode assembly 33 and the electrode terminal 322. For example, when the electrode sheet 1 in the embodiments of the present application is a positive electrode sheet, one current collecting member 34 is used to connect a positive electrode tab and the positive electrode terminal, and another current collecting member 34 is used to connect a negative electrode tab and the negative electrode terminal.

In some embodiments, the battery cell may be assembled into a battery module, there may be one or a plurality of battery cells included in the battery module, and those skilled in the art may select a specific quantity based on the application and capacity of the battery module.

### [Battery]

An embodiment of the present application provides a battery, including the battery cell in the above embodiment. FIG. 10 is a schematic diagram of a battery according to an embodiment of the present application. As shown in FIG. 10, the battery 5 may include a plurality of battery cells (not shown in the figure).

The battery cells 3 may directly constitute the battery 5. Alternatively, the battery cells may first constitute a battery module, and then a plurality of battery modules constitute the battery 5.

### [Electrical apparatus]

An embodiment of the present application provides an electrical apparatus including the battery in the embodiments above.

FIG. 11 is a schematic diagram of an electrical apparatus according to an embodiment of the present application. As shown in FIG. 11, the present application provides an electrical apparatus 6, which includes the battery in the embodiments above.

Optionally, the electrical apparatus may be an energy storage device, an illumination device, a spacecraft, etc., and this embodiment of the present application includes, but is not limited to this.

Examples of the present application are described below. The example described below are illustrative only and are not to be construed as limiting the present application. In the examples, specific techniques or conditions are not indicated, and they are performed according to techniques or conditions described in documents in the art or according to the specification of the product. The reagents or instruments used without specifying the manufacturer(s) are conventional products that are commercially available.

### [Examples]

### Example 1

In Embodiment 1, the structure of the electrode sheet 1 may be shown in FIG. 2. The slurry of the first insulating layer 121 and the second insulating layer 122 is the same. The thickness d1 of the first insulating layer 121 was 5 µm, the thickness d2 of the second insulating layer 122 was 15 µm, and the first insulating layer 121 and the second insulating layer 122 were manufactured through gravure coating.

In the slurry of the first insulating layer 121 and the second insulating layer 122, the mass contents of the thermoplastic polymer A1 and A2 were each 40wt%, the mass contents of the inorganic particles B1 and B2 were each 30wt%, and the mass contents of the binder C1 and C2 were each 30wt%, based on the total mass of the slurry. The thermoplastic polymer was made of a polyethylene wax with a melting point of 130°C; the inorganic particles were boehmite; and the binder was polyacrylonitrile.

### Examples 2-8

Examples 2-8 differ from Example 1 in that: the thickness d1 of the first insulating layer 121 is different from the thickness d2 of the second insulating layer 122; accordingly, d2/d1 is varied as well, where the specific parameters can be seen in Table 1.

### Examples 9-10

Examples 9-10 differ from Example 1 in that: the thermoplastic polymers are different.

### Examples 11-13

Examples 11-13 differ from Example 1 in that: the mass content of the thermoplastic polymer, the mass content of the inorganic particles, and the mass content of the binder in the slurry of the first insulating layer 121 and the second insulating layer 122 are different.

### Examples 14-15

Example 14 differs from Example 6 in that: the particle sizes of the thermoplastic polymer and the inorganic particles are different.

Example 15 differs from Example 1 in that: the thickness of the first insulating layer 121 is different from that of the second insulating layer 122, and the particle sizes of the thermoplastic polymer and the inorganic particles are different.

In Examples 14 and 15, the thickness of the first insulating layer 121 and the thickness of the second insulating layer 122 were larger than those of Examples 6 and 1, and the particle sizes of the alternative thermoplastic polymer and inorganic particles were also larger.

### Examples 16-17

Examples 16-17 differ from Example 1 in that: in the first direction, the ratio k1 of the size k1 of the first portion 1021 of the tab 102 to the size k3 of the tab 102: k3 is different.

### Examples 18-20

Examples 18-20 differ from Example 1 in that: the thickness of a single layer of the tab and the number of layers of the tab are different.

### Comparative example 1

Comparative Example 1 differs from Example 1 in that: the thickness of the insulating layer on two sides of the first portion of the tab is the same, and the insulating slurry of the insulating layer does not include a thermoplastic polymer. The insulating slurry includes boehmite and a binder, where the mass ratio of the boehmite to the binder is 70: 30, and the binder is polyvinylidene fluoride (PVDF).

### Comparative Examples 2-3

Comparative Examples 2-3 differ from Example 1 in that: the thickness of the first insulating layer 121 is the same as that of the second insulating layer 122.

In Table 1, d1 is the thickness of the first insulating layer 121, d2 is the thickness of the first insulating layer 122, T is the melting point of the thermoplastic polymer, A1 and A2 are the mass contents of the thermoplastic polymer in the slurry of the first insulating layer 121 and the second insulating layer 122, respectively, B1 and B2 are the mass contents of the inorganic particles in the slurry of the first insulating layer 121 and the second insulating layer 122, C1 and C2 are the mass contents of the binder in the slurry of the first insulating layer 121 and the second insulating layer 122, and F1 is the binding force between the first insulating layer 121 and the current collector 10, F2 is a binding force between the second insulating layer 122 and the current collector 10, d3 is the thickness of the coating layer 123, R is a resistance of the coating layer 123, k1: k3 is the ratio of the size k1 of the first insulating layer in the first direction to the sum k3 of the size of the first insulating layer and the size of the second portion 1012.

**In** Table 2, whether short-circuiting occurs can reflect the state of the thermoplastic polymer at the end surface, that is, whether the end surface is completely provided with a coating layer, where the short-circuiting is not caused by the insertion of the tab into the electrode assembly. "10% inserted" means that through statistical analysis and sampling of CT images obtained from the battery cells, there is a 10% frequency of detecting insertion of the tab into the electrode assembly. "10% unqualified" means that through self-discharge testing of the battery cells, there is a 10% frequency of detecting abnormal self-discharge in the battery cells.

**Table 1: Parameters in Examples and Comparative Examples**

| | d1/ µm | d2/µm | d2/d1 | Insulating slurry | | | | | | | | |
|---|---|---|---|---|---|---|---|---|---|---|---|---|
| | | | | Thermoplastic polymer | | | | Inorganic particle | | | Binder | |
| | | | | Type | D¹ₘₐₓ/ µm | T/°C | A1/wt% A2/wt% | D²ₘₐₓ/ µm | Dᵥ50/ µm | B1/wt% B2/wt% | Type | C1/wt% C2/wt% |
| Example 1 | 5 | 15 | 3 | Polyethylene wax | 3 | 130 | 40 | 3 | 1 | 30 | Polyacrylonitrile | 30 |
| Example 2 | 1 | 11 | 11 | Polyethylene wax | 1 | 130 | 40 | 1 | 0.5 | 30 | Polyacrylonitrile | 30 |
| Example 3 | 10 | 20 | 2 | Polyethylene wax | 3 | 130 | 40 | 3 | 1 | 30 | Polyacrylonitrile | 30 |
| Example 4 | 2 | 10 | 5 | Polyethylene wax | 1 | 130 | 40 | 1 | 0.5 | 30 | Polyacrylonitrile | 30 |
| Example 5 | 4 | 16 | 4 | Polyethylene wax | 3 | 130 | 40 | 3 | 1 | 30 | Polyacrylonitrile | 30 |
| Example 6 | 6 | 18 | 3 | Polyethylene wax | 3 | 130 | 40 | 3 | 1 | 30 | Polyacrylonitrile | 30 |
| Example 7 | 1 | 20 | 20 | Polyethylene wax | 1 | 130 | 40 | 1 | 0.5 | 30 | Polyacrylonitrile | 30 |
| Example 8 | 10 | 18 | 1.8 | Polyethylene wax | 3 | 130 | 40 | 3 | 1 | 30 | Polyacrylonitrile | 30 |
| Example 9 | 5 | 15 | 3 | Low melting point polyester | 3 | 100 | 40 | 3 | 1 | 30 | Polyacrylonitrile | 30 |
| Example 10 | 5 | 15 | 3 | Polyamide | 3 | 200 | 40 | 3 | 1 | 30 | Polyacrylonitrile | 30 |
| Example 11 | 5 | 15 | 3 | Polyethylene wax | 3 | 130 | 30 | 3 | 1 | 35 | Polyacrylonitrile | 35 |
| Example 12 | 5 | 15 | 3 | Polyethylene wax | 3 | 130 | 40 | 3 | 1 | 40 | Polyacrylonitrile | 20 |
| Example 13 | 5 | 15 | 3 | Polyethylene wax | 3 | 130 | 35 | 3 | 1 | 35 | Polyacrylonitrile | 30 |
| Example 14 | 6 | 18 | 3 | Polyethylene wax | 6 | 130 | 40 | 6 | 2 | 30 | Polyacrylonitrile | 30 |
| Example 15 | 12 | 24 | 2 | Polyethylene wax | 12 | 130 | 40 | 12 | 6 | 30 | Polyacrylonitrile | 30 |
| Example 16 | 5 | 15 | 3 | Polyethylene wax | 3 | 130 | 40 | 3 | 1 | 30 | Polyacrylonitrile | 30 |
| Example 17 | 5 | 15 | 3 | Polyethylene wax | 3 | 130 | 40 | 3 | 1 | 30 | Polyacrylonitrile | 30 |
| Example 18 | 5 | 15 | 3 | Polyethylene wax | 3 | 130 | 40 | 3 | 1 | 30 | Polyacrylonitrile | 30 |
| Example 19 | 5 | 15 | 3 | Polyethylene wax | 3 | 130 | 40 | 3 | 1 | 30 | Polyacrylonitrile | 30 |
| Example 20 | 5 | 15 | 3 | Polyethylene wax | 3 | 130 | 40 | 3 | 1 | 30 | Polyacrylonitrile | 30 |
| Comparative example 1 | 40 | 40 | 1 | / | / | / | / | / | / | 70 | PVDF | 30 |
| Comparative example 2 | 10 | 10 | 1 | Polyethylene wax | 3 | 130 | 40 | 3 | 1 | 30 | Polyacrylonitrile | 30 |
| Comparative example 3 | 40 | 40 | 1 | Polyethylene wax | 3 | 130 | 40 | 3 | 1 | 30 | Polyacrylonitrile | 30 |

**Table 2 Experimental results of Comparative Examples and Examples**

| | F1/N/m | F2/N/m | d3/ nm | R/Ω | k₁:k₃ | Tab | | Whether or not the tab is inserted into the electrode assembly | Whether or not there is thermoplastic polymer on the end surface | Whether or not short-circuiting occurs when the fully charged anode is contacted | Whether or not self-discharge test is qualified |
|---|---|---|---|---|---|---|---|---|---|---|---|
| | | | | | | d4/ µm | Number of layers | | | | |
| Example 1 | 145 | 65 | 140 | 230 | 0.5 | 13 | 50 | Not inserted | Yes | Not short-circuited | qualified |
| Example 2 | 200 | 95 | 100 | 50 | 0.5 | 13 | 50 | Not inserted | Yes | Not short-circuited | qualified |
| Example 3 | 100 | 35 | 175 | 390 | 0.5 | 13 | 50 | Not inserted | Yes | Not short-circuited | qualified |
| Example 4 | 185 | 100 | 100 | 50 | 0.5 | 13 | 50 | Not inserted | Yes | Not short-circuited | qualified |
| Example 5 | 170 | 60 | 140 | 230 | 0.5 | 13 | 50 | Not inserted | Yes | Not short-circuited | qualified |
| Example 6 | 140 | 50 | 150 | 280 | 0.5 | 13 | 50 | Not inserted | Yes | Not short-circuited | qualified |
| Example 7 | 200 | 35 | 145 | 250 | 0.5 | 13 | 50 | Not inserted | Yes | Not short-circuited | qualified |
| Example 8 | 100 | 50 | 170 | 360 | 0.5 | 13 | 50 | 5% inserted | Yes | Not short-circuited | qualified |
| Example 9 | 145 | 65 | 140 | 230 | 0.5 | 13 | 50 | Not inserted | Yes | Not short-circuited | qualified |
| Example 10 | 145 | 65 | 140 | 230 | 0.5 | 13 | 50 | Not inserted | Yes | Not short-circuited | qualified |
| Example 11 | 165 | 75 | 120 | 140 | 0.5 | 13 | 50 | Not inserted | Yes | Not short-circuited | qualified |
| Example 12 | 120 | 40 | 140 | 230 | 0.5 | 13 | 50 | Not inserted | Yes | Not short-circuited | qualified |
| Example 13 | 145 | 65 | 130 | 180 | 0.5 | 13 | 50 | Not inserted | Yes | Not short-circuited | qualified |
| Example 14 | 140 | 50 | 150 | 280 | 0.5 | 13 | 50 | Not inserted | Yes | Not short-circuited | qualified |
| Example 15 | 80 | 20 | 200 | 500 | 0.5 | 13 | 50 | Not inserted | Yes | Not short-circuited | qualified |
| Example 16 | 145 | 65 | 140 | 230 | 0.3 | 13 | 50 | Not inserted | Yes | Not short-circuited | qualified |
| Example 17 | 145 | 65 | 140 | 230 | 0.4 | 13 | 50 | Not inserted | Yes | Not short-circuited | qualified |
| Example 18 | 145 | 65 | 140 | 230 | 0.5 | 10 | 50 | Not inserted | Yes | Not short-circuited | qualified |
| Example 19 | 145 | 65 | 140 | 230 | 0.5 | 15 | 50 | Not inserted | Yes | Not short-circuited | qualified |
| Example 20 | 145 | 65 | 140 | 230 | 0.5 | 13 | 80 | Not inserted | Yes | Not short-circuited | qualified |
| Comparative example 1 | 10 | 10 | / | / | 0.5 | 13 | 50 | 10% inserted | None | Short-circuiting | 10% unqualified |
| Comparative example 2 | 100 | 100 | 140 | 230 | 0.5 | 13 | 50 | 8% inserted | Yes | Not short-circuited | 8% unqualified |
| Comparative example 3 | 10 | 10 | 400 | 1000 | 0.5 | 13 | 50 | 10% inserted | Yes | Not short-circuited | 10% unqualified |

### [Preparation of a battery cell]

### (1) Configuration of slurry

The thermoplastic polymer, inorganic particles and the binder were mixed in a certain ratio, and a solvent was added and stirred evenly. The slurry viscosity was about 50 to 500 mPa·s. The solvent was water. Specific thermoplastic polymer, inorganic particle, and binder ratios can be found in Table 1.

### (2) Coating and drying

An aluminum foil was coated with the slurry, with a coating width of 10 mm, leaving the width of the manufactured tab empty foil to be 30 µm. After drying in an oven at a drying temperature of 100 C, the thickness of the first insulating layer and the thickness of the second insulating layer after drying are shown in Table 1. Subsequently, the aluminum foil was uniformly coated with the positive electrode slurry, and the positive electrode active material layer was obtained after drying in an oven at 100 °C. The positive electrode active material in the positive electrode slurry is lithium iron phosphate.

### (3) Laser die cutting

The above product was subjected to rolling and cutting using a laser to obtain a positive electrode sheet, where the laser has a power of 20 W, a frequency of 100 kHz, and a traveling speed of 30 m/min.

### (4) manufacturing of a battery cell

The above-mentioned positive electrode sheet, a separator, and a negative electrode sheet were stacked in sequence, such that the separator was provided between the positive electrode sheet and the negative electrode sheet and could separate the positive electrode sheet and the negative electrode sheet; then the stacked members were wound into a case, the case was dried, the electrolyte solution was injected, and the case was encapsulated to obtain a lithium-ion battery cell.

It should be noted that for Comparative Example 1 and Comparative Example 3, the first insulating layer and the second insulating layer were manufactured by extrusion coating.

### [Confirmation of the first insulating layer and the second insulating layer]

The surface of the electrode sheet was observed with the scanning electron microscope to see if the first insulating layer and the second insulating layer was present on the surface. The electrode sheet was cut open, the cross section of the electrode sheet was photographed with the scanning electron microscope, and the thickness of the first insulating layer and the second insulating layer was observed according to the photographed photograph.

### [Confirmation of a coating layer]

The end surface was observed with a scanning electron microscope (SEM) to see if the coating layer was present at the end surface, and moreover, the thickness of the coating layer may also be observed through a photograph taken with the scanning electron microscope.

### [Test of overlapping a fully charged anode]

There was contact between the end surface after laser die-cutting and a fully charged anode to observe whether short-circuiting occurs.

### [Test for insertion of a tab into an electrode assembly]

The battery cell was inspected using computed tomography (CT) scanning technology to detect whether the tab was inserted into the electrode assembly.

**In** the embodiment of the present application, a plurality of battery cells having the same arrangement may be tested, and the risk of insertion of the tab into the electrode assembly was determined based on the results of the plurality of tests. For example, "10% inserted" may indicate that, among multiple battery cells with identical configurations, 10% of the CT pictures captured show insertion of the tab into the electrode assembly.

### [Test of a binding force]

A plate-shaped material with a flat surface was selected as the first substrate, and one side of the double-sided binder tape was adhered to the surface of the first substrate, and the other side of the double-sided binder tape was adhered to the first insulating layer on one side of the electrode sheet. A plate having an adhesive coating layer region was selected as the second substrate, which was adhered to the first insulating layer on the other side of the electrode sheet. At this time, the electrode sheet was positioned between the first substrate and the second substrate. The same sides of the first substrate and the second substrate were respectively fixed to the lower end and the upper end of a universal tensile testing machine for tensile testing. After the force-relative displacement curve displayed on the universal tensile testing machine stabilized, the tensile force value and displacement value were recorded, and a relatively stable segment of the curve was selected to calculate the binding force, where binding force = tensile force/displacement.

### [Test for resistance of a coating layer]

The electrical resistance of the coating layer can be measured using an ohmmeter.

For example, one end of the ohmmeter was connected to the tab of the positive electrode sheet (specifically, a part of the tab not coated with the first insulating layer) in the embodiment, and the other end was connected to the tab of the negative electrode sheet which contacts the end surface of the positive electrode sheet.

### [Measurement of particle size]

The volume particle size distribution Dv50 can be determined by using a particle size analyzer-laser diffraction method, and specifically, by using a laser diffraction scattering particle size analyzer according to the manufacturer's instructions with reference to the standard GB/T19077-2016. For example, prior to manufacturing of the slurry, an appropriate number of inorganic particles or thermoplastic polymer was taken, and an average volume particle size of the material was measured using a MasterSizer 2000 laser particle size analyzer. An appropriate amount of sample was taken (with a sample concentration sufficient to ensure 8-12% opacity), 20 ml of deionized water was added, while out for 5 min (53 KHz/120 W) to ensure full dispersion of the sample, and then the sample was measured according to the GB/T19077-2016/ISO 13320:2009 standard. Thereafter, Dₘₐₓ can be calculated from DV50 or obtained from the instrument.

For another example, the electrode sheet may be tested using a scanning electron microscope, so as to obtain images of the region of the first insulating layer and the second insulating layer of the electrode sheet. The particle size of the thermoplastic polymer or the inorganic particles was measured according to the image.

### [Confirmation of a melting point of the thermoplastic polymer]

The melting point of the thermoplastic polymer can be determined by means of a differential scanning calorimeter (DSC) device. Specifically, as an example, 8 mg of a sample was put into a DSC device, and the temperature was raised under an atmosphere of N2 at a flow rate of 50 ml/min, at a temperature raising rate of 10 C/min, and at a cut-off temperature of 400 °C, thereby testing the melting point of the thermoplastic polymer.

For another example, the melting point of the thermoplastic polymer may be determined based on the specific thermoplastic polymer after the specific type of the thermoplastic polymer is determined. For example, for a crystalline thermoplastic polymer, the melting point refers to a melting point of the crystalline thermoplastic polymer; and for an amorphous thermoplastic polymer, the melting point refers to a glass transition temperature of the amorphous thermoplastic polymer.

### [Mass ratio of the thermoplastic polymer, the inorganic particles and the binder]

The above-mentioned mass ratio can be obtained depending on the mass of the thermoplastic polymer emulsion added, the mass of the inorganic particles and the mass of the binder during the manufacturing process.

In addition, the thermoplastic polymer, the binder, and the inorganic particles in the electrode sheets can also be determined in the following manner.

The first insulating layer is scraped off using a knife to form a powder or a block. A film sample of about 1 g was placed in a mold and heated to the melting point of the thermoplastic polymer to form a thin film, which was subjected to infrared testing (FTIR) to determine the type of polymer in the film by its characteristic peaks. Thermogravimetric infrared spectroscopy (TG-FTIR) can also be used to heat a sample of the film from room temperature to 600°C and determine the composition of the film by its thermal decomposition temperature, weight loss ratio, and product composition.

### [Test for self-discharge]

The battery is adjusted to 80% SOC and then stored for 48 hours. the voltage before storage is V1, the voltage after storage is V2, and k=(V1-V2)/48,

where k is used to characterize the self-discharge performance of the battery, and when k≤0.2mV/h, it indicates that the self-discharge test is passed.

In the embodiment of the present application, a plurality of battery cells having the same arrangement may be tested, and the risk of whether or not the self-discharge is qualified was determined based on the results of the plurality of tests. For example, 10% unqualified may mean that among multiple battery cells with identical configurations, 10% of the battery cells fail the self-discharge test.

It should be noted that the insertion of a tab into an electrode assembly in the embodiment of the present application means insertion of the tab into the non-tab portion of the electrode assembly, that is, insertion of the tab into the electrode assembly main body.

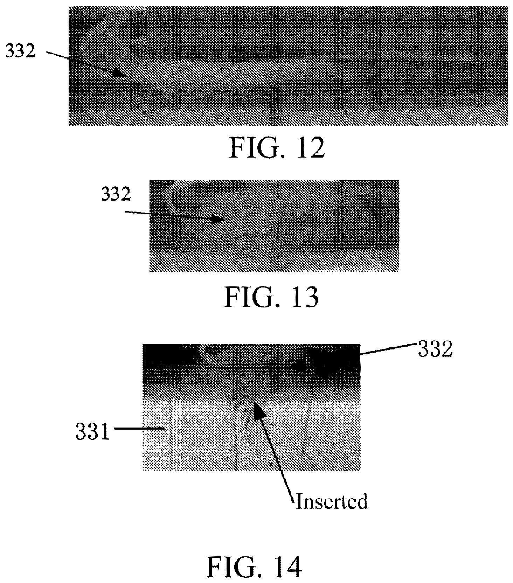

FIG. 12 is a CT view of a tab portion of a battery cell according to an embodiment of the present application; FIG. 13 is a CT view of a tab portion of a battery cell in a comparative example of the present application; and FIG. 14 is a CT view of insertion of a tab portion into an electrode assembly main body in a comparative example of the present application.

FIGS. 13 and 14 are schematic CT views of the tab portion and electrode assembly of Comparative Example 3. Referring to Comparative Example 3 and FIGS. 13 and 14, in the case where the thickness of the second insulating layer is the same as that of the first insulating layer and the thickness of the second insulating layer and the thickness of the first insulating layer are both larger, there is an increased risk that the tab portion diverges from the middle and is inserted into the electrode assembly main body. Referring to FIG. 12 and Examples 1-20, in the case where the number of layers of the tab is large, there is no insertion of the tab into the electrode assembly or the risk of insertion into the electrode assembly is reduced. In this way, the embodiments of the present application may reduce the risk of insertion of the tab into the electrode assembly.

Referring to Examples 2-7, as the thickness of the first insulating layer and the thickness of the second insulating layer are increased, the thickness of the coating layer is gradually increased, and the binding force between the current collector and the first insulating layer and the second insulating layer is gradually decreased. By rationally setting the thickness of the first insulating layer and the second insulating layer, a coating layer with a relatively appropriate thickness can be obtained, and at the same time, the coating layer has an appropriate resistance.

Referring to Examples 1-7 and Example 8, the risk of insertion of the tab into the electrode assembly is further reduced when d2/d1 is greater than or equal to 2. In addition, referring to Examples 14 to 15 as well as Examples 1 to 8, the manufacturing of the first insulating layer and the second insulating layer was facilitated by rationally setting the particle sizes of the thermoplastic polymer and the inorganic particles. The maximum particle size of the inorganic particles does not exceed the thickness of the first insulating layer, and it is possible to reduce the risk of scratches occurring in the process of producing the first insulating layer due to the excessive size of the inorganic particles. The manufacturing of the first insulating layer is facilitated by rationally setting the particle size of the inorganic particles.

Referring to Examples 9-10, the examples of the present application can be applied to different thermoplastic polymers.

Referring to Examples 11-13, as the mass content of the thermoplastic polymer increases, more of the thermoplastic polymer melts and flows to the end surface at the time of cutting, so that the coating layer has a greater thickness. As the mass content of the thermoplastic polymer increases, the mass content of the binder that can be added decreases, and in the case where the mass content of the binder decreases, the binding force between the current collector and the first insulating layer decreases. The mass content of the thermoplastic polymer is set rationally, such that the coating layer has an appropriate thickness; the mass content of the binder is rationally set, such that there is an appropriate binding force between the current collector and the first insulating layer and the second insulating layer.

Referring to examples 16-17, the examples of the present application are applicable to an electrode sheet having a k1: k3 of 0.3 to 0.5.

As the number of layers of the tab increases, the total thickness of the tab gradually increases, the difficulty in bending the tab increases, and thus the risk of insertion of the tab into the electrode assembly increases. In the examples of the present application, referring to Examples 1-20, the risk of insertion of the tab into the electrode assembly of the examples of the present application is low in the case where the number of tab layers is large.

It should be noted that the above-mentioned embodiments and comparative examples have been described with respect to the positive electrode sheet in which the current collector is an aluminum foil, and the embodiments of the present application are also applicable to the positive electrode sheet and the negative electrode sheet in which the current collector is made of other materials. **In** addition, although the data are only described by taking the same slurry of the second insulating layer of the first insulating layer as an example, the solution of the present application is still applicable in the case where the slurry thereof is different.

It should be noted that the present application is not limited to the above-described implementation. The above-described implementation is merely an example, and any implementation having substantially the same configuration as the technical concept and exhibiting the same operation and effect within the scope of the claims of the present application is included in the technical scope of the present application. In addition, various modifications that can be conceived by those skilled in the art may be made to the implementations without departing from the subject matter of the present application, and other implementations constructed by combining some of the constituent elements in the implementations are also included in the scope of the present application.

## Claims

1. An electrode sheet, comprising: a current collector, a first insulating layer and a second insulating layer,
wherein
the current collector comprises a main body part and tabs, the tabs extend from the first end of the main body part, and the first end is one end of the main body part in a first direction, each tab comprises a first portion and a second portion, the first portion is close to the main body part with respect to the second portion, the surfaces of the two sides of the first portion are respectively provided with the first insulating layer and the second insulating layer, and the thickness d2 of the second insulating layer is greater than the thickness d1 of the first insulating layer.

2. The electrode sheet according to claim 1, wherein a ratio of the thickness d2 of the second insulating layer to the thickness d1 of the first insulating layer satisfies d2/d1≥1.8.

3. The electrode sheet according to claim 1 or 2, wherein a ratio of the thickness d2 of the second insulating layer to the thickness d1 of the first insulating layer satisfies 2<d2/d1≤20.

4. The electrode sheet according to any one of claims 1 to 3, wherein the thickness d1 of the first insulating layer satisfies 1 µm≤d1≤12 µm; optionally, 4 µm≤d1≤6 µm.

5. The electrode sheet according to any one of claims 1 to 4, wherein the thickness d2 of the second insulating layer satisfies 10 µm≤d2≤24 µm; optionally, 16 µm≤d2≤18 µm.

6. The electrode sheet according to any one of claims 1 to 5, wherein the main body part comprises a coating region and a transition region, the transition region is provided between the coating region and the tab, and the surfaces of the two sides of the transition region are provided with the first insulating layer and the second insulating layer, respectively.

7. The electrode sheet according to claim 6, wherein the electrode sheet further comprises an active material layer, and the active material layer is provided on a surface of at least one side of the coating region.

8. The electrode sheet according to any one of claims 1 to 7, wherein the first insulating layer and the second insulating layer comprise a thermoplastic polymer.

9. The electrode sheet according to claim 8, wherein the maximum particle size D¹ₘₐₓ of the thermoplastic polymer satisfies D¹ₘₐₓ≤12 µm; optionally, D¹ₘₐₓ satisfies D¹ₘₐₓ≤6 µm.

10. The electrode sheet according to any one of claims 8 or 9, wherein based on a total mass of the first insulating layer, a mass content A1 of the thermoplastic polymer satisfies 30wt%≤A1≤40wt%, and/or based on a total mass of the second insulating layer, a mass content A2 of the thermoplastic polymer satisfies 30wt%≤A2≤40wt%.

11. The electrode sheet according to any one of claims 8 to 10, wherein a melting point T of the thermoplastic polymer satisfies 100°C≤T≤200°C; optionally, T satisfies 100°C≤T≤130°C.

12. The electrode sheet according to claim 11, wherein the thermoplastic polymer comprises at least one of polystyrene, polyolefin, polyimide, polyester, polyphenylene sulfide, polyamide, and modified polymers thereof, optionally, the polyester comprises a copolymer of butyl acrylate and ethyl methacrylate, optionally, the polyamide comprises polyaramid; optionally, the polyolefin comprises polyethylene wax.

13. The electrode sheet according to any one of claims 8 to 12, wherein the first insulating layer and the second insulating layer further comprise inorganic particles.

14. The electrode sheet according to claim 13, wherein based on a total mass of the first insulating layer, a mass content B1 of the inorganic particles satisfies 30wt%≤B1≤40wt%, and/or based on a total mass of the second insulating layer, a mass content B2 of the inorganic particles satisfies 30wt%≤B2≤40wt%.

15. The electrode sheet according to claim 13 or 14, wherein a maximum particle size D²ₘₐₓ of the inorganic particles satisfies D²ₘₐₓ≤12 µm; optionally, D²ₘₐₓ satisfies D²ₘₐₓ≤6 µm.

16. The electrode sheet according to any one of claims 8 to 15, wherein the first insulating layer and the second insulating layer further comprise a binder.

17. The electrode sheet according to claim 16, wherein based on a total mass of the first insulating layer, a mass content C1 of the binder satisfies 20wt%≤C1≤40wt%, and/or based on a total mass of the second insulating layer, a mass content C2 of the binder satisfies 20wt%≤C2≤40wt%.

18. The electrode sheet according to claim 16 or 17, wherein the binder comprises at least one of a polyacrylic acid-polyacrylonitrile copolymer, a polyacrylate-polyacrylonitrile copolymer, a polyether acrylate, a polyacrylic acid, a polyacrylonitrile, a gelatin, a chitosan, and a sodium alginate.

19. The electrode sheet according to any one of claims 1 to 18, wherein the first insulating layer and the second insulating layer are different in color.

20. The electrode sheet according to any one of claims 1 to 19, wherein a binding force F1 between the first insulating layer and the current collector satisfies 80 N/m≤F1≤200 N/m; optionally, F1 satisfies 80 N/m≤F1≤145 N/m.

21. The electrode sheet according to any one of claims 1 to 20, wherein a binding force F2 between the second insulating layer and the current collector satisfies 20 N/m≤F2≤100 N/m; optionally, F2 satisfies 20 N/m≤F2≤65 N/m.

22. The electrode sheet according to any of claims 1 to 21, wherein, in the first direction, a size k1 of the first insulating layer is the same as a size k2 of the second insulating layer.

23. The electrode sheet according to any one of claims 1 to 22, wherein in the first direction, a ratio of the size k1 of the first insulating layer to a sum k3 of the sizes of the first insulating layer and the second portion satisfies 0.3≤k1: k3≤0.5.

24. The electrode sheet according to any one of claims 1 to 23, wherein the electrode sheet further comprises a coating layer which is provided on a first end surface, and the first end surface is an end surface of the main body part at the first end.

25. The electrode sheet according to claim 24, wherein the thickness d3 of the coating layer satisfies 100 nm≤d3≤200 nm; optionally, the thickness d3 of the coating layer satisfies 140 nm≤d3≤200 nm.

26. The electrode sheet according to claim 24 or 25, wherein a resistance R of the coating layer satisfies R ≥ 50 Ω; optionally, R satisfies 230 Ω≤R≤500 Ω.

27. The electrode sheet according to any one of claims 24 to 26, wherein the coating layer comprises a thermoplastic polymer, the thermoplastic polymer in the coating layer is made of the same material as that of the thermoplastic polymer in the first insulating layer and the second insulating layer.

28. The electrode sheet according to claim 27, wherein the thermoplastic polymer in the coating layer is a film layer.

29. The electrode sheet according to any one of claims 1 to 28, wherein the thickness d4 of the first portion of the tab satisfies 10 µm≤d4≤15 µm.

30. The electrode sheet according to any one of claims 1 to 29, wherein the electrode sheet comprises a positive electrode sheet; optionally, the current collector comprises an aluminum foil.

31. The electrode sheet according to claim 30, wherein the positive electrode sheet comprises a positive electrode active material, and the positive electrode active material comprises at least one of a layered transition metal oxide, a spinel material, and an olivine-structured phosphate material.

32. A method of manufacturing the electrode sheet according to any one of claims 1 to 31, comprising:
coating surfaces of at least two sides of the first portion of the tab of the current collector with a first insulating slurry and a second insulating slurry respectively to manufacture the first insulating layer and the second insulating layer, wherein the thickness of the second insulating layer is greater than that of the first insulating layer; and
cutting the current collector provided with the first insulating layer and the second insulating layer to manufacture the electrode sheet.

33. The method according to claim 32, wherein the coating surfaces of at least two sides of the first portion of the tab of the current collector with a first insulating slurry and a second insulating slurry respectively to manufacture the first insulating layer and the second insulating layer comprises:
coating the surfaces of the two sides of the first portion and the transition region of the main body part of the current collector with the first insulating slurry and the second insulating slurry respectively to manufacture the first insulating layer and the second insulating layer.

34. The method according to claim 32 or 33, wherein the coating surfaces of at least two sides of the first portion of the tab of the current collector with a first insulating slurry and a second insulating slurry respectively to manufacture the first insulating layer and the second insulating layer comprises:
coating a surface of one side of the first portion with the first insulating slurry through gravure coating to manufacture the first insulating layer; and
coating the other surface of the first portion with the second insulating slurry through the gravure coating or extrusion coating to manufacture the second insulating layer.

35. The method of any one of claims 32 to 34, further comprising:
coating the coating region of the main body part of the current collector with the active material to manufacture an active material layer.

36. The method according to any one of claims 32 to 35, wherein the cutting the current collector provided with the first insulating layer and the second insulating layer to manufacture the electrode sheet comprises:
controlling a laser processing tool to cut the current collector provided with the first insulating layer and the second insulating layer.

37. The method according to any one of claims 32 to 36, wherein the first insulating slurry is the same as the second insulating slurry.

38. A battery cell, comprising the electrode sheet according to any one of claims 1 to 31 and/or the electrode sheet manufactured by the method according to any one of claims 32 to 37.

39. The battery cell according to claim 38, wherein the battery cell comprises an electrode assembly, the electrode assembly comprises an electrode assembly main body and a tab portion extending from the electrode assembly main body, a surface on which the second insulating layer is located faces the electrode assembly main body, and a surface on which the first insulating layer is located faces away from the electrode assembly main body.

40. The battery cell according to claim 39, wherein the tab portion comprises a plurality of tabs, and a sum of a number of layers of the plurality of tabs is greater than or equal to 50.

41. A battery, comprising the battery cell according to any one of claims 38 to 40.

42. An electrical apparatus, comprising the battery according to claim 41.
